(19) Europäisches Patentamt / European Patent Office / Office européen des brevets

(11) **EP 4 679 736 A1**

(12) **EUROPEAN PATENT APPLICATION**

(43) Date of publication:
**14.01.2026 Bulletin 2026/03**

(21) Application number: **25187526.6**

(22) Date of filing: **04.07.2025**

(51) International Patent Classification (IPC):
**H04B 17/10** (2015.01)    **H04B 17/14** (2015.01)
**H04L 5/00** (2006.01)    **H04L 25/02** (2006.01)
**H04W 52/24** (2009.01)

(52) Cooperative Patent Classification (CPC):
**H04B 17/104; H04B 17/14;** H04B 17/18;
H04B 17/19; H04B 17/22; H04B 17/296;
H04B 17/309; H04L 5/005; H04L 25/022;
H04L 25/0224; H04L 25/03343; H04W 52/243

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.07.2024 GB 202409868**

(71) Applicant: **Nokia Technologies Oy
02610 Espoo (FI)**

(72) Inventors:
• **OLESEN, Poul**
  **9530 Støvring (DK)**
• **MAHENDRA, Rachit**
  **261131 Khairabad (IN)**
• **ROM, Christian**
  **9210 Aalborg (DK)**
• **VOOK, Frederick**
  **Schaumburg, 60194 (US)**
• **ROSE, Luca**
  **91400 Orsay (FR)**

(74) Representative: **Swindell & Pearson Limited
48 Friar Gate
Derby DE1 1GY (GB)**

(54) **APPLYING TRANSMISSION COMPENSATION TO TRANSMITTED SIGNALS**

(57) An apparatus 10 is provided comprising: first and second transmitter circuitry 20_1, 20_2; first receiver circuitry 30_1; means for applying different transmission compensation to signals transmitted by the first/second transmitter circuitry 20_1, 20_2; means for calibrating the different transmission compensation comprising: using a signal transmitted by the first transmitter circuitry 20_1 that is coupled, within the apparatus 10, to and received by the first receiver circuitry 30_1 and a signal transmitted by the second transmitter circuitry 20_2 that is coupled, within the apparatus 10, to and received by the first receiver circuitry 30_1 to determine the different transmission compensation for application to a signal transmitted by the first transmitter circuitry 20_1 and to a signal transmitted by the second transmitter circuitry 20_2. The apparatus is asymmetric in that it supports simultaneous operation of more receiver channels than transmitter channels.

FIG 2A

EP 4 679 736 A1

FIG 2B

**Description**

TECHNOLOGICAL FIELD

Examples of the disclosure relate to estimation of a response of a radio channel and its applications. Some relate to an improved estimation of a response of a radio channel, and its applications.

BACKGROUND

It is desirable to apply transmission compensation to transmitted signals based on an estimate of the transmission channels used. When a radio channel is estimated, in one direction, at a receiver based on a received signal, transmitted by a transmitter, the estimation includes not only an estimation of a response of the radio channel itself but also a response of the transmitter circuitry and a response of the receiver circuitry. In radio communications it is desirable to use an accurate estimate of a response of a radio channel. One example application is pre-compensation (e.g. pre-coding) of transmitted signals such that reception is improved.

BRIEF SUMMARY

According to various, but not necessarily all, examples there is provided an apparatus comprising: first transmitter circuitry for transmitting a signal; second transmitter circuitry for transmitting a signal; first receiver circuitry for receiving a signal; means for applying different transmission compensation to a signal transmitted by the first transmitter circuitry and to a signal transmitted by the second transmitter circuitry; means for calibrating the different transmission compensation comprising: means for coupling the first transmitter circuitry, within the apparatus, to the first receiver circuitry wherein a signal transmitted by the first transmitter circuitry is coupled, within the apparatus, for reception by the first receiver circuitry; means for coupling the second transmitter circuitry, within the apparatus, to the first receiver circuitry wherein a signal transmitted by the second transmitter circuitry is coupled, within the apparatus, for reception by the first receiver circuitry; using a signal transmitted by the first transmitter circuitry that is coupled, within the apparatus, to and received by the first receiver circuitry and a signal transmitted by the second transmitter circuitry that is coupled, within the apparatus, to and received by the first receiver circuitry to determine the different transmission compensation for application to a signal transmitted by the first transmitter circuitry and to a signal transmitted by the second transmitter circuitry.

In some but not necessarily all examples, the apparatus comprises means for using precoding to apply the different transmission compensation to a signal transmitted by the first transmitter circuitry and to a signal transmitted by the second transmitter circuitry for codebook based uplink transmission or for non-codebook based uplink transmission.

In some but not necessarily all examples, the different transmitter circuitry provide different paths to antenna ports and wherein different receiver circuitry comprise different paths from antenna ports, wherein at least some of the transmitter circuitry share a power amplifier and/or wherein at least some of the transmitter circuitry can be switched to different antenna ports.

In some but not necessarily all examples, different receiver have distinct different low noise amplifiers.

In some but not necessarily all examples, the apparatus comprises switching circuitry for selective coupling the first receiver circuitry or second receiver circuitry to at least one of the first transmitter circuitry and the second transmitter circuitry

In some but not necessarily all examples, the apparatus comprises: a first transmission directional coupler for coupling the signal, transmitted by the first transmitter circuitry, out of a first transmission path leading from the first transmitter circuitry, a second transmission directional coupler for coupling the signal, transmitted by the second transmitter circuitry, out of a second transmission path leading from the second transmitter circuitry, a first reception directional coupler for coupling a signal coupled from transmitter circuitry to the first receiver circuitry, a second reception directional coupler for coupling a signal coupled from transmitter circuitry to the second receiver circuitry; a transmission-selection switching-circuitry for controlling whether a signal coupled from one or both of the first transmission directional coupler and the second transmission directional coupler is coupled to the first reception directional coupler or the second reception directional coupler.

In some but not necessarily all examples, the apparatus comprises: a first antenna port; a second antenna port, wherein the first transmitter circuitry is for transmitting a signal via the first antenna port, the second transmitter circuitry is for transmitting a signal via the second antenna port, the first receiver circuitry is for receiving a signal via the first antenna port; and wherein the different transmission compensation is applied to a signal transmitted by the first transmitter circuitry via the first antenna port and to a signal transmitted by the second transmitter circuitry via the second antenna port, and the means for calibrating the different transmission compensation determines the different transmission compensation for application to a signal transmitted by the first transmitter circuitry via the first antenna port and to a signal transmitted by the second transmitter circuitry via the second antenna port.

In some but not necessarily all examples, the apparatus comprises: second receiver circuitry for receiving a signal; third transmitter circuitry for transmitting a signal; means for applying different transmission compensation to signals transmitted by different transmitter circuitry; means for calibrating the different transmission compensation comprising: means for coupling the third transmitter circuitry, within the apparatus, to receiver circuitry wherein a signal transmitted by the third transmitter circuitry is coupled, within the apparatus, for reception by the receiver circuitry; using a signal transmitted by the third transmitter circuitry that is coupled, within the apparatus, to and received by receiver circuitry and a signal transmitted by another transmitter circuitry that is coupled, within the apparatus, to and received by the receiver circuitry to determine the different transmission compensation for application to a signal transmitted by the third transmitter circuitry and to a signal transmitted by the other transmitter circuitry.

In some but not necessarily all examples, the means for calibrating the different transmission compensation comprises: means for coupling the third transmitter circuitry, within the apparatus, to the second receiver circuitry wherein a signal transmitted by the third transmitter circuitry is coupled, within the apparatus, for reception by the second receiver circuitry; means for coupling the second transmitter circuitry, within the apparatus, to the second receiver circuitry wherein a signal transmitted by the second transmitter circuitry is coupled, within the apparatus, for reception by the second receiver circuitry; using a signal transmitted by the second transmitter circuitry, or the first transmitter circuitry, that is coupled, within the apparatus, to and received by the second receiver circuitry, and a signal transmitted by the third transmitter circuitry that is coupled, within the apparatus, to and received by the second receiver circuitry, to determine the transmission compensation for application to a signal transmitted by the third transmitter circuitry.

In some but not necessarily all examples, the means for calibrating the different transmission compensation comprises means for: dividing a baseband symbol received at the first receiver circuitry by a baseband symbol transmitted by the first transmitter circuitry coupled to the first receiver circuitry to obtain a transfer function for the first transmitter circuitry and the first receiver circuitry; dividing a baseband symbol received at the first receiver circuitry by a baseband symbol transmitted by the second transmitter circuitry coupled to the first receiver circuitry to obtain a transfer function for the first transmitter circuitry and the second receiver circuitry; dividing one of the two transfer functions by the other transfer function.

In some but not necessarily all examples, the means for calibrating the different transmission compensation is operational during uplink transmission from the apparatus to a transmission reception point for purposes other than calibrating the different transmission compensation.

In some but not necessarily all examples, the apparatus comprises a first antenna for transmission and reception and a second antenna for transmission and reception, wherein the first antenna has maximum gain in a first direction and the second antenna has maximum gain in a second direction different to the first direction.

In some but not necessarily all examples, the apparatus is a user equipment.

According to various, but not necessarily all, examples there is provided a method comprising: calibrating transmission compensation comprising: coupling, within an apparatus, of a first one of different transmitter circuitry, to a first receiver circuitry wherein a signal transmitted by the first one of the different transmitter circuitry is coupled, within the apparatus, for reception by the first receiver circuitry; coupling, within the apparatus, of a second one of the different transmitter circuitry to the first receiver circuitry wherein a signal transmitted by the second one of the different transmitter circuitry is coupled, within the apparatus, for reception by the first receiver circuitry; using a signal transmitted by the first one of the different transmitter circuitry that is coupled, within the apparatus, to and received by the first receiver circuitry and a signal transmitted by the second one of the different transmitter circuitry that is coupled, within the apparatus, to and received by the first receiver circuitry to determine transmission compensation for application to a signal transmitted by the second one of the different transmitter circuitry; and applying the determined transmission compensation to a signal transmitted by the second one of the different transmitter circuitry.

According to various, but not necessarily all, examples there is provided a computer program that when run on one or more processors of an apparatus, causes: determining transmission compensation using a signal transmitted by a first one of different transmitter circuitry that is coupled, within the apparatus, to and received by the first receiver circuitry and a signal transmitted by the second one of the different transmitter circuitry that is coupled, within the apparatus, to and received by the first receiver circuitry to determine transmission compensation for application to a signal transmitted by the second one of the different transmitter circuitry; and application of the determined transmission compensation to a signal transmitted by the second one of the different transmitter circuitry.

According to various but not necessarily all examples, there is provided an apparatus comprising: at least one processor; and at least one memory storing instructions that, when executed by the at least one processor, cause the apparatus at least to perform: calibrating transmission compensation comprising: coupling, within an apparatus, of a first one of different transmitter circuitry, to a first receiver circuitry wherein a signal transmitted by the first one of the different transmitter circuitry is coupled, within the apparatus, for reception by the first receiver circuitry; coupling, within the apparatus, of a second one of the different transmitter circuitry to the first receiver circuitry wherein a signal transmitted by the second one of the different transmitter circuitry is coupled, within the apparatus, for reception by the first receiver circuitry; using a signal transmitted by the first one of the different transmitter circuitry that is coupled, within the apparatus, to and received by the first receiver circuitry and a signal transmitted by the second one of the different transmitter circuitry that is coupled, within the apparatus, to and received by the first receiver circuitry to determine transmission compensation for application to a signal transmitted by the second one of the different transmitter circuitry; and applying the determined transmission compensation to a signal transmitted by the second one of the different transmitter circuitry.

In some but not necessarily all examples, the is configured to use precoding to apply the different transmission compensation to a signal transmitted by the first transmitter circuitry and to a signal transmitted by the second transmitter circuitry for codebook based uplink transmission or for non-codebook based uplink transmission.

In some but not necessarily all examples, different transmitter circuitry provide different paths to antenna ports and wherein different receiver circuitry comprise different paths from antenna ports, wherein at least some of the transmitter circuitry share a power amplifier and/or wherein at least some of the transmitter circuitry can be switched to different antenna ports.

In some but not necessarily all examples, different receivers have distinct different low noise amplifiers.

In some but not necessarily all examples, the apparatus comprises switching circuitry for selective coupling the first receiver circuitry or second receiver circuitry to at least one of the first transmitter circuitry and the second transmitter circuitry.

In some but not necessarily all examples, the apparatus comprises: a first transmission directional coupler for coupling the signal, transmitted by the first transmitter circuitry, out of a first transmission path leading from the first transmitter circuitry, a second transmission directional coupler for coupling the signal, transmitted by the second transmitter circuitry, out of a second transmission path leading from the second transmitter circuitry, a first reception directional coupler for coupling a signal coupled from transmitter circuitry to the first receiver circuitry, a second reception directional coupler for coupling a signal coupled from transmitter circuitry to the second receiver circuitry; a transmission-selection switching-circuitry for controlling whether a signal coupled from one or both of the first transmission directional coupler and the second transmission directional coupler is coupled to the first reception directional coupler or the second reception directional coupler.

In some but not necessarily all examples, the apparatus comprises a first antenna port; a second antenna port, wherein the first transmitter circuitry is for transmitting a signal via the first antenna port, the second transmitter circuitry is for transmitting a signal via the second antenna port, the first receiver circuitry is for receiving a signal via the first antenna port; and wherein the different transmission compensation is applied to a signal transmitted by the first transmitter circuitry via the first antenna port and to a signal transmitted by the second transmitter circuitry via the second antenna port, and the apparatus is configured to determine the different transmission compensation for application to a signal transmitted by the first transmitter circuitry via the first antenna port and to a signal transmitted by the second transmitter circuitry via the second antenna port.

In some but not necessarily all examples, the apparatus comprises: second receiver circuitry for receiving a signal; third transmitter circuitry for transmitting a signal; and is configured to: apply different transmission compensation to signals transmitted by different transmitter circuitry; calibrate the different transmission compensation comprising: coupling the third transmitter circuitry, within the apparatus, to receiver circuitry wherein a signal transmitted by the third transmitter circuitry is coupled, within the apparatus, for reception by the receiver circuitry; using a signal transmitted by the third transmitter circuitry that is coupled, within the apparatus, to and received by receiver circuitry and a signal transmitted by another transmitter circuitry that is coupled, within the apparatus, to and received by the receiver circuitry to determine the different transmission compensation for application to a signal transmitted by the third transmitter circuitry and to a signal transmitted by the other transmitter circuitry.

In some but not necessarily all examples, the apparatus is configured to couple the third transmitter circuitry, within the apparatus, to the second receiver circuitry wherein a signal transmitted by the third transmitter circuitry is coupled, within the apparatus, for reception by the second receiver circuitry; couple the second transmitter circuitry, within the apparatus, to the second receiver circuitry wherein a signal transmitted by the second transmitter circuitry is coupled, within the apparatus, for reception by the second receiver circuitry;

use a signal transmitted by the second transmitter circuitry, or the first transmitter circuitry, that is coupled, within the apparatus, to and received by the second receiver circuitry, and a signal transmitted by the third transmitter circuitry that is coupled, within the apparatus, to and received by the second receiver circuitry, to determine the transmission compensation for application to a signal transmitted by the third transmitter circuitry.

In some but not necessarily all examples, the apparatus is configured to divide a baseband symbol received at the first receiver circuitry by a baseband symbol transmitted by the first transmitter circuitry coupled to the first receiver circuitry to obtain a transfer function for the first transmitter circuitry and the first receiver circuitry; divide a baseband symbol received at the first receiver circuitry by a baseband symbol transmitted by the second transmitter circuitry coupled to the first receiver circuitry to obtain a transfer function for the first transmitter circuitry and the second receiver circuitry; divide one of the two transfer functions by the other transfer function.

In some but not necessarily all examples, the apparatus is configured to perform calibrating the different transmission compensation during uplink transmission from the apparatus to a transmission reception point for purposes other than calibrating the different transmission compensation.

In some but not necessarily all examples, the apparatus comprises a first antenna for transmission and reception and a second antenna for transmission and reception, wherein the first antenna has maximum gain in a first direction and the second antenna has maximum gain in a second direction different to the first direction

In some but not necessarily all examples, the apparatus is a circuitry; calibrate user equipment.

According to various, but not necessarily all, examples there is provided examples as defined in the claims, and/or the description.

BRIEF DESCRIPTION

Some examples will now be described with reference to the accompanying drawings in which: FIGs. 1A, 1B, 1C, 1D show examples of the subject matter described herein; FIGs. 2A and 2B show examples of the subject matter described herein; FIG. 3 shows an example of the subject matter described herein; FIG. 4 shows an example of the subject matter described herein; FIG. 5 shows an example of the subject matter described herein; FIG. 6A & 6B show examples of the subject matter described herein; FIG. 7 shows an example of the subject matter described herein; FIG. 8A & 8B show examples of the subject matter described herein; FIG. 9 shows an example of the subject matter described herein; FIG. 10A & 10B show examples of the subject matter described herein; FIG. 11 shows an example of the subject matter described herein; FIG. 12A & 12B show examples of the subject matter described herein; FIGs 13A, 13B, 13C, 13D show an example of the subject matter described herein; FIG 14 shows an example of the subject matter described herein; FIGs. 15A, 15B, 15C, 15D, 15E show examples of the subject matter described herein; FIG. 16 shows an example of the subject matter described herein; FIG. 17 shows an example of the subject matter described herein; FIG. 18 shows an example of the subject matter described herein; The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

In some examples, an apparatus estimates a radio channel in a first direction, at receiver circuitry based on a received signal, transmitted in the first direction by a (network) transmitter. Such an estimation includes not only an estimation of the radio channel itself but also a response of the apparatus receiver circuitry and a response of the (network) transmitter circuitry.

In some examples, the apparatus pre-compensate (pre-code) a signal transmitted by the user equipment in a second direction, opposite the first direction, in dependence upon an estimate of the radio channel in the first direction. The precoding can be codebook based or non-codebook based. The transmitted signal is, however, affected by a response of the apparatus transmitter circuitry.

It would be desirable to account for, in the precoding, the difference between an actual response of the apparatus transmitter circuitry and an assumed response of the apparatus transmitter circuitry, for example, based on the response of the apparatus receiver circuitry. This would result in the signal being transmitted by the apparatus, when received, being largely independent of the particular apparatus.

In some examples, the first direction is a downlink (DL) direction and the second direction is an uplink (UL) direction. In some examples the apparatus is a user equipment (UE). In at least some examples, the (network) transmitter is a transmission-reception point of a radio cellular telecommunications network, for example, at or associated with a base station such as, for example, a gNB.

Thus in some examples, a user equipment (UE) estimates a radio channel in a downlink (DL) direction, at UE receiver circuitry based on a received reference signal, transmitted in the downlink direction by a (network) transmitter. Such an estimation includes not only an estimation of the radio channel itself but also a response of the UE receiver circuitry and a response of the (network) transmitter circuitry. In some examples, a user equipment (UE) to pre-compensates (pre-code) a signal transmitted by the user equipment in the uplink (UL) direction in dependence upon the estimate of the radio channel in the downlink (DL) direction. The precoding can be codebook based (determined by the network) or non-codebook based (determined by the UE). The UE transmitted signal is, however, affected by a response of the UE transmitter circuitry and not by a response of the UE receiver circuitry.

It would, in some examples, be desirable to account for the difference between the response (transfer function) of the UE receiver circuitry and the response (transfer function) of the UE transmitter circuitry via pre-compensation (precoding) of a UE transmitted signal. This would result in the pre-compensated (pre-coded) signal transmitted by the UE, when received, being largely independent of the particular UE.

The UE transmitter circuitry has its own transfer function and the UE receiver circuitry has its own transfer function. If we have knowledge of these transfer functions then, for non-codebook based precoding, we can include them in the compensation of the UE transmitter circuitry to make the UE transmitter circuitry transmit appropriately for the given channel response (measured by the UE receiver circuitry). If we have knowledge of the UE transmitter circuitry transfer functions then, for codebook based precoding, we can make sure any coherency constraints required or implied by the codebook based precoding can be met.

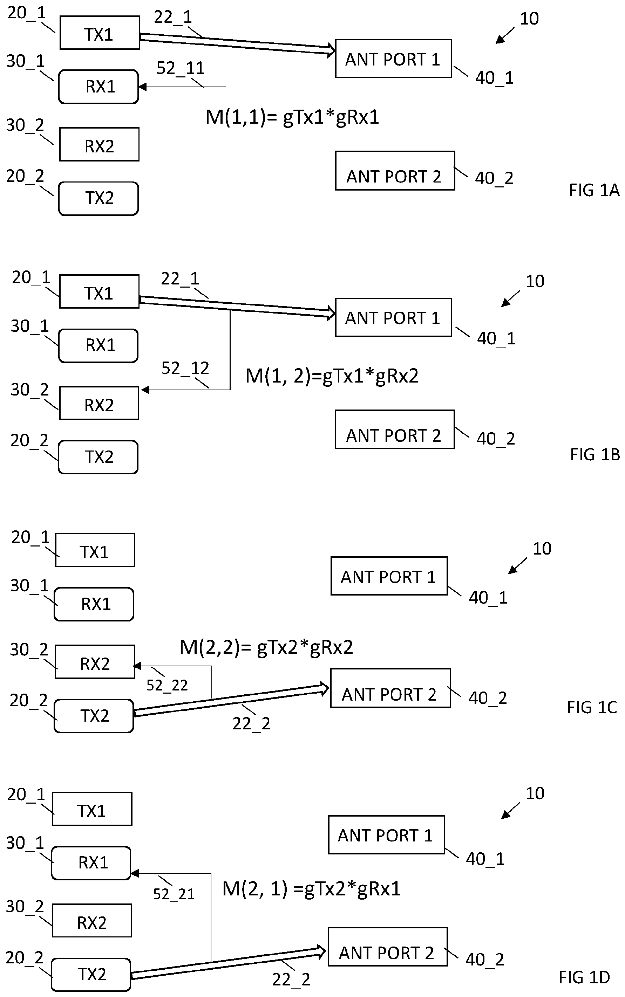

Figs 1A, 1B, 1C, 1D illustrate an apparatus 10. The apparatus 10 comprises a first transmitter circuitry 20_1 for transmitting a signal, a first receiver circuitry 30_1 for receiving a signal; a second receiver circuitry 30_2 for receiving a signal; and second transmitter circuitry 20_2 for transmitting a signal.

In at least some examples, the apparatus 10 is a radio communications apparatus. The first transmitter circuitry 20_1 is for transmitting a radio frequency signal. The first receiver circuitry 30_1 is for receiving a radio frequency signal. The second receiver circuitry 30_2 is for receiving a radio frequency signal. The second transmitter circuitry 20_2 is for transmitting a radio frequency signal.

In at least some examples, the radio communications apparatus 10 is a terminal for a cellular radio communications network, for example, a user equipment in a Third Generation Partnership Project (3GPP) compliant network. The first transmitter circuitry 20_1 is for transmitting a radio signal in a particular uplink (UL) channel (e.g. at a particular frequency band, and optionally at a particular time). The first receiver circuitry 30_1 for receiving a radio signal in a particular downlink (DL) channel (e.g. at a particular frequency band, and optionally at a particular time). The second transmitter circuitry 20_2 is for transmitting a radio signal in a particular uplink (UL) channel (e.g. at a particular frequency band, and optionally at a particular time).

The use of multiple transmitters can be used for spatial transmit diversity, UL spatial multiplexing, UL multiple-input-multiple-output (UL-MIMO), UL carrier aggregation, UL dual connectivity etc. The use of multiple receivers can be used for spatial reception diversity, DL spatial multiplexing, DL multiple-input-multiple-output (DL-MIMO), DL carrier aggregation, DL dual connectivity etc. In some examples there are the same number of transmitters and receivers in a transceiver. In other examples, there are different numbers of transmitters and receivers in a transceiver. In some examples, there are more receiver circuitry 30_i than transmitter circuitry 20_j in a transceiver (Tx-Rx asymmetry)

For transmission compensation, the apparatus 10 comprises means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1; and means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1. The apparatus 10 is configured to use a signal transmitted by the first transmitter circuitry 20_1 that is coupled, within the apparatus 10, to and received by the first receiver circuitry 30_1 and a signal transmitted by the second transmitter circuitry 20_2 that is coupled, within the apparatus 10, to and received by the first receiver circuitry 30_1 to determine the different transmission compensation for application to a signal transmitted by the first transmitter circuitry 20_1 and to a signal transmitted by the second transmitter circuitry 20_2.

For reception compensation, the apparatus 10 comprises:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;
means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

The apparatus 10 is configured to use a signal transmitted by the first transmitter circuitry 20_1 that is coupled, within the apparatus 10, to and received by the first receiver circuitry 30_1 and a signal transmitted by the first transmitter circuitry 20_1 that is coupled, within the apparatus 10, to and received by the second receiver circuitry 30_2 to determine the different reception compensation for application for a signal received via the first receiver circuitry 30_1 and for a signal received via the second receiver circuitry 20_2.

In some examples, the apparatus 10 comprises:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;
means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

Optionally it comprises means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

In the example illustrated the apparatus 10 comprises multiple antenna ports including a first antenna port and a second antenna port.

The first transmitter circuitry 20_1 and the first receiver circuitry 30_1 are associated with the first antenna port 40_1. The first transmitter circuitry 20_1 is for transmitting a signal via the first antenna port, and the first receiver circuitry 30_1 is for receiving a signal via the first antenna port.

The second transmitter circuitry 20_2 and the second receiver circuitry 30_2 are associated with the second antenna port 40_2. The second transmitter circuitry 20_2 is for transmitting a signal via the second antenna port, and the second receiver circuitry 30_2 is for receiving a signal via the second antenna port.

In some but not necessarily all examples, the first transmitter circuitry 20_1 and the first receiver circuitry 30_1 can be coupled with the first antenna port 40_1 but not the second antenna port 40_2. The first transmitter circuitry 20_1 and the first receiver circuitry 30_1 are exclusively associated with the first antenna port 40_1.

In some but not necessarily all examples, the second transmitter circuitry 20_2 and the second receiver circuitry 30_2 can be coupled with the second antenna port 40_2 but not the first antenna port 40_1. The second transmitter circuitry 20_2 and the second receiver circuitry 30_2 are exclusively associated with the second antenna port 40_2.

Let gTx1 be a response (transfer function) of the first transmitter circuitry 20_1 for transmitting a signal, gTx2 be a response (transfer function) of the second transmitter circuitry 20_2 for transmitting a signal, gTxn be a response (transfer function) of the $n^{th}$ transmitter circuitry 20_n for transmitting a signal.

Let gRx1 be a response (transfer function) of the first receiver circuitry 30_1 for receiving a signal, gRx2 be a response (transfer function) of the second receiver circuitry 30_2 for receiving a signal, gRxm be a response (transfer function) of the $m^{th}$ receiver circuitry 30_m for receiving a signal.

A combined transfer function M(n, m) is the combination (product in frequency domain) of the response (transfer function) for a transmitter circuitry 20_n and the response (transfer function) for a receiver circuitry 30_m.

$$M(n, m) = gTxn* \ gRxm$$

Dividing a baseband symbol received at the receiver circuitry 30_m by a baseband symbol transmitted by the $n^{th}$ transmitter circuitry 20_n coupled to the receiver circuitry 30_m provides the combined transfer function M(n, m) for the transmitter circuitry 20_n and the receiver circuitry 30_m.

A transmission calibration parameter R(Tx, i, j) for transmitter circuitry 20_j (with respect to transmitter circuitry 20_i) can be obtained from the ratio of combined transfer functions M(i, m) and M(j,m) which are dependent upon the same receiver circuitry 30_m response (transfer function) and different transmitter circuitry 20_i, 20_j responses (transfer functions).

$$R(Tx, i, j) = M(i, m) \ / \ M(j, m) = gTxi* \ gRxm \ / \ gTxj* \ gRxm = gTxi \ /gTxj$$

The transmission calibration parameter formed is independent of receiver circuitry. It can be used for codebook pre-coding. It can be used for non-codebook precoding.

If required, a reception calibration parameter R(Rx, i, j) for receiver circuitry 30_j (with respect to receiver circuitry 30_i) can be obtained from the ratio of combined transfer functions M(n, i) and M(n, j) which are dependent upon the same transmitter circuitry 20_n response (transfer function) and different receiver circuitry 30_i, 30_j responses (transfer functions).

$$R(Rx, i, j) = M(n, i) \ / \ M(n, j) = gTxn* \ gRxi \ / \ gTxn* \ gRxj = gRxi \ /gRxj$$

The reception calibration parameter formed is independent of transmitter circuitry.

If required, various combined transfer functions M(n, m) can be obtained and used to determine calibration parameters for non-codebook precoding.

Calibration parameters can be used to remove the impact of a particular receiver circuitry 30_i and/or a particular transmitter circuitry 20_j.

When an apparatus 10, for example a user equipment, estimates a response (transfer function) of a downlink channel, the estimate inherently includes the response (transfer function) of the base station transmitter circuitry and the UE receiver circuitry in addition to the response (transfer function) of the actual radio channel. The use of an appropriate reception calibration parameter allows the impact of the UE receiver circuitry to be removed providing a better channel estimate.

If the UE uses the response (transfer function) of a downlink channel, as a response (transfer function) of an uplink channel or to create a response (transfer function) of an uplink channel, the use of an appropriate transmission calibration parameter allows the impact of the UE transmitter circuitry to be removed from the response (transfer function) of an uplink channel. This adjusted response (transfer function) of the uplink channel can be used to precode a transmitted signal so that the signal received at the base station after modification by the transmitter circuitry of the UE and the uplink channel, is as intended.

The use of an estimated response (transfer function) of a downlink channel, as a response (transfer function) of an uplink channel for precoding or to create a response (transfer function) of an uplink channel for precoding, is known to those skilled in the art. What is new is that the apparatus itself improves the estimate used for precoding by taking into account the impact of the receiver circuitry and/or transmitter circuitry involved at the apparatus 10 and achieves transmission-reception reciprocity.

If transmitter circuitry 20_n and the receiver circuitry 30_m are associated, in operation, with the same antenna port(s) (same transceiver), then the combined transfer function M(n, m) is a mutual-combined transfer function, for example M(n, n).

If transmitter circuitry 20_n and the receiver circuitry 30_m are associated, in operation, with different antenna port(s) (different transceiver), the combined transfer function M(n, m) is a cross-combined transfer function, for example M(n, n+i) where $i \neq 0$.

Dividing the mutual-combined transfer function M(i, i) for the transmitter circuitry 20_i and the first receiver circuitry 30_i (same antenna port) by the cross-combined transfer function M(i, j) for the transmitter circuitry 20_i and the receiver circuitry 30_j (different antenna ports) provides the reception calibration parameter R(Rx, i, j). R(Rx, i, j)= M(i, i) / M(i, j) = gTxi* gRxi / gTxi* gRxj = gRxi /gRxj. It can be desirable for j to be adjacent i. That is j=i+1 or j=i -1. The routing required to determine the cross-combined transfer function M(i, j) is thus minimized. The apparatus 10 can perform this calculation.

Dividing the mutual-combined transfer function M(i, i) for the transmitter circuitry 20_i and the first receiver circuitry 30_i (same antenna port) by the cross-combined transfer function M(j, i) for the transmitter circuitry 20_j and the receiver circuitry 30_i (different antenna ports) provides the transmission calibration parameter R(Tx, i, j). R(Tx, i, j)= M(i, i) / M(j, i) = gTxi* gRxi / gTxj* gRxi = gTxi /gTxj . It can be desirable for j to be adjacent i. That is j=i+1 or j=i -1. The routing required to determine the cross-combined transfer function M(j, i) is thus minimized. The apparatus 10 can perform this calculation.

FIG1A illustrates an example where first transmitter circuitry 20_1 is coupled, within the apparatus 10, to the first receiver circuitry 30_1. A signal transmitted by the first transmitter circuitry 20_1 along first transmission path 22_1 is coupled, within the apparatus 10 along path 52_11, for reception by the first receiver circuitry 30_1.

Dividing a baseband symbol received at the first receiver circuitry 30_1 via path 52_11 by a baseband symbol transmitted by the first transmitter circuitry 20_1 coupled to the first receiver circuitry 30_1 provides the combined transfer function M(1, 1)= gTx1* gRx1 for the first transmitter circuitry 20_1 and the first receiver circuitry 30_1.

FIG1B illustrates an example where first transmitter circuitry 20_1 is coupled, within the apparatus 10, to the second receiver circuitry 30_2. A signal transmitted by the first transmitter circuitry 20_1 along a first transmission path 22_1 is coupled, within the apparatus 10 along path 52_12, for reception by the second receiver circuitry 30_2. Dividing a baseband symbol received at the second receiver circuitry 30_2 via path 52_12 by a baseband symbol transmitted by the first transmitter circuitry 20_1 coupled to the second receiver circuitry 30_2 provides the combined transfer function M(1, 2) = gTx1* gRx2 for the first transmitter circuitry 20_1 and the second receiver circuitry 30_2.

FIG1C illustrates an example where second transmitter circuitry 20_2 is coupled, within the apparatus 10, to the second receiver circuitry 30_2. A signal transmitted by the second transmitter circuitry 20_2 along a second transmission path 22_2 is coupled, within the apparatus 10 along path 52_22, for reception by the second receiver circuitry 30_2. Dividing a baseband symbol received at the second receiver circuitry 30_2 via path 52_22 by a baseband symbol transmitted by the second transmitter circuitry 20_2 coupled to the second receiver circuitry 30_2 provides the combined transfer function M(2, 2)= gTx2* gRx2 for the second transmitter circuitry 20_2 and the second receiver circuitry 30_2.

FIG1D illustrates an example where second transmitter circuitry 20_2 is coupled, within the apparatus 10, to the first receiver circuitry 30_1. A signal transmitted by the second transmitter circuitry 20_2 along the second transmission path 22_2 is coupled, within the apparatus 10 via path 52_21, for reception by the first receiver circuitry 30_1. Dividing a baseband symbol received at the first receiver circuitry 30_1 via path 52_21 by a baseband symbol transmitted by the second transmitter circuitry 20_2 coupled to the first receiver circuitry 30_1 provides the combined transfer function M(2, 1) = gTx2* gRx1 for the second transmitter circuitry 20_2 and the first receiver circuitry 30_1.

In general, $i^{th}$ transmitter circuitry 20_i is coupled, within the apparatus 10, to the $j^{th}$ receiver circuitry 30_j. A signal transmitted by the $i^{th}$ transmitter circuitry 20_i along the $i^{th}$ transmission path 22_i is coupled, within the apparatus 10 via path 52_ij, for reception by the $j^{th}$ receiver circuitry 30_j. Dividing a baseband symbol received at the $j^{th}$ receiver circuitry 30_j via path 52_ij by a baseband symbol transmitted by the $i^{th}$ transmitter circuitry 20_i coupled to the $j^{th}$ receiver circuitry 30_j.j provides the combined transfer function M(i, j)= gTxi* gRxj for the $i^{th}$ transmitter circuitry 20_i and the $i^{th}$ receiver circuitry 30_j.j.

The combined transfer function M(1, 1) and the combined transfer function M(2,2) are mutual combined transfer functions. They are obtained using intra-transceiver routing.

The combined transfer function M(1, 2) and the combined transfer function M(2,1) are cross combined transfer functions. They are obtained using inter-transceiver routing.

The apparatus 10 can calculate the ratio of mutual combined transfer functions to cross combined transfer functions to determine various reception calibration parameters and/or transmission calibration parameters.

The ratio of the mutual combined transfer function to the cross combined transfer function, where the ratio has common transmitter circuitry and different receiver circuitry, provides reception calibration parameters.

The ratio of the mutual combined transfer function to the cross combined transfer function, where the ratio has common receiver circuitry and different transmitter circuitry, provides transmission calibration parameters.

The ratio of the mutual combined transfer function M(1, 1) to the cross combined transfer function M(1, 2), which ratio has a common transmitter circuitry and different receiver circuitry, provides a reception calibration parameter R(Rx, 1, 2) for the second receiver circuitry 30_2 (with respect to the first receiver circuitry 30_1):

$$R(Rx, 1, 2)= M(1, 1) / M(1, 2) = gTx1^* gRx1 / gTx1^* gRx2 = gRx1 /gRx2$$

If first receiver circuitry 30_1 (Rx 1) is a reference, R(Rx, 1, 2) will be applied to the second receiver circuitry 30_2 for calibration relative to first receiver circuitry 30_1. No calibration required for first receiver circuitry 30_1.

The ratio of the mutual combined transfer function M(1, 1) and the cross combined transfer function M(2, 1), which has a common receiver circuitry and different transmitter circuitry, provides a transmission calibration parameter R(Tx, 1, 2) for the second transmitter circuitry 20_2:

$$R(Tx, 1, 2)= M(1, 1) / M(2, 1) = gTx1^* gRx1 / gTx2^* gRx1 = gTx1 /gTx2$$

If first transmitter circuitry 20_1 (Tx 1) is a reference, R(Tx, 1, 2) will be applied to second transmitter circuitry 20_2 for calibration relative to first transmitter circuitry 20_1. No calibration required for first transmitter circuitry 20_1.

The ratio of the mutual combined transfer function M(2, 2) and the cross combined transfer function M(2, 1), which has a common transmitter circuitry and different receiver circuitry, provides a reception calibration parameter R(Rx, 2, 1) for the first receiver circuitry 30_1:

$$R(Rx, 2, 1)= M(2, 2) / M(2, 1) = gTx2^* gRx2 / gTx2^* gRx1 = gRx2 /gRx1$$

If second receiver circuitry 30_2 (Rx 2) is a reference, R(Rx, 2, 1) will be applied to first receiver circuitry 30_1 for calibration relative to second receiver circuitry 30_2 . No calibration required for second receiver circuitry 30_2.

As R(Rx, 2,1) = 1/ R(Rx, 1, 2), only one of R(Rx, 2, 1) and R(Rx, 1, 2) needs to be determined from measurement.

If R(Rx, 1, 2) is to be used then M(1,1) and M(1,2) requires the coupling illustrated in FIGs 1A and 1B but not the coupling illustrated in FIG 1C and 1D.

If R(Rx, 2, 1) is to be used then M(2,2) and M(2,1) requires the coupling illustrated in FIGs 1C and 1D but not the coupling illustrated in FIG 1A and 1B.

The ratio of the mutual combined transfer function M(2, 2) and the cross combined transfer function M(1, 2), which has a common receiver circuitry and different transmitter circuitry, provides a transmission calibration parameter R(Tx, 2, 1) for the first transmitter circuitry 20_1: R(Tx, 2, 1)= M(2, 2) / M(1, 2) = gTx2^* gRx2 / gTx1^* gRx2 = gTx2 /gTx1

If second transmitter circuitry 20_2 (Tx 2) is a reference, R(Tx, 2, 1) will be applied to first transmitter circuitry 20_1 for calibration relative to second transmitter circuitry 20_2. No calibration required for second transmitter circuitry 20_2.

As R(Tx, 2, 1) = 1/ R(Tx, 1, 2), only one of R(Tx, 2, 1) and R(Tx, 1, 2) needs to be determined from measurement. If R(Tx, 1, 2) is to be used then M(1,1) and M(2,1) requires the coupling illustrated in FIGs 1A and 1D but not the coupling illustrated in FIG 1 B and 1C. If R(Tx, 2, 1) is to be used then M(2,2) and M(1,2) requires the coupling illustrated in FIGs 1C and 1B but not the coupling illustrated in FIG 1A and 1D.

| [113] Coupli ng | [114] FI G. 1A | [115] FI G. 1B | [116] FI G. 1C | [117] FI G. 1D |
|---|---|---|---|---|
| [118] R(Rx, 1,2) | [119] Y | [120] Y | [121] | [122] |

(continued)

| [123] R(Rx, 2,1) | [124] | [125] | [126] Y | [127] Y |
| [128] R(Tx, 1,2) | [129] Y | [130] | [131] | [132] Y |
| [133] R(Tx, 2,1) | [134] | [135] Y | [136] Y | [137] |

Thus if R(Rx, 1, 2) and R(Tx, 1, 2) are to be used then the coupling illustrated in FIGs 1A, 1B and 1D but not 1C is required. Thus is R(Rx, 1, 2) and R(Tx, 2, 1) are to be used then the coupling illustrated in FIGs 1A, 1B and 1C but not 1D is required. Thus is R(Rx, 2, 1) and R(Tx, 1, 2) are to be used then the coupling illustrated in FIGs 1C, 1D and 1A but not 1B is required. Thus is R(Rx, 2, 1) and R(Tx, 2, 1) are to be used then the coupling illustrated in FIGs 1B, 1C and 1D but not 1A is required. That is three of the four couplings illustrated are required. However, there may be advantages in having coupling circuitry capable of making the four combinations even if only three of the four coupling combinations are required.

In general an apparatus 10 comprises, for transmission compensation, means for coupling:

the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

It optionally comprises, for reception compensation, means for coupling first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2.

It optionally comprises as additional coupling means, means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1 .

In at least some examples, the apparatus 10 comprises means for using a signal transmitted by the first transmitter circuitry that is coupled, within the apparatus, to and received by the first receiver circuitry and a signal transmitted by the second transmitter circuitry that is coupled, within the apparatus, to and received by the first receiver circuitry to determine the different transmission compensation for application to a signal transmitted by the first transmitter circuitry and to a signal transmitted by the second transmitter circuitry.

In at least some examples, optionally, the apparatus 10 has means for using a signal transmitted by the first transmitter circuitry that is coupled, within the apparatus, to and received by the first receiver circuitry and a signal transmitted by the first transmitter circuitry that is coupled, within the apparatus, to and received by the second receiver circuitry to determine different reception compensation for application to a signal received at the first receiver circuitry and to a signal received at the second receiver circuitry.

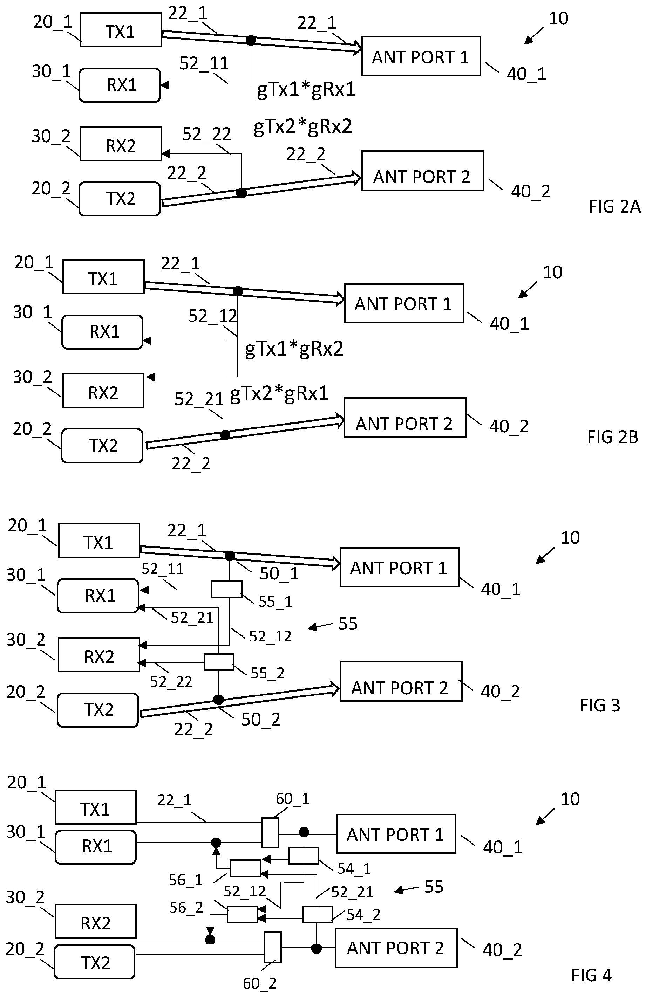

FIG 2A combines FIGs 1A and 1C and illustrates that coupling of the first transmitter 20_1 to the first receiver circuitry 30_1 can be independent of coupling of second transmitter 20_2 to the second receiver circuitry 30_2 and, if appropriate, can be performed simultaneously.

FIG 2B combines FIGs 1B and 1D and illustrates that coupling of the first transmitter 20_1 to the second receiver circuitry 30_2 can be independent of coupling of second transmitter 20_2 to the first receiver circuitry 30_1 and, if appropriate, can be performed simultaneously.

FIG 3 illustrates coupling circuitry suitable for performing the coupling previously described.

The coupling circuitry is configured to couple:

the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1;the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2.

The coupling circuitry is configured as switching circuitry 55.The switching circuitry is configured to couple either of two transmitter circuitry 20_i, 20_j to either of two reception circuitry 20_k, 20_l. In this example, the two reception circuitry are two reception circuitry 20_i, 20_j.

The first transmitter circuitry 20_1 is coupled via a coupler 50_1 to a first switching circuit 55_1. The first switching circuitry 55_1 is configured to, at least, selectively couple the first transmitter circuitry 20_1 to the first receiver circuitry 30_1 or to the second receiver circuitry 30_2. In at least some examples, the first switching circuitry 55_1 is configured to selectively de-couple the first transmitter circuitry 20_1 from the first receiver circuitry 30_1 and/or from the second receiver circuitry 30_2.

The second transmitter circuitry 20_2 is coupled via a coupler 50_2 to a second switching circuit 55_2. The second switching circuitry 55_2 is configured to, at least, selectively couple the second transmitter circuitry 20_2 to the first receiver circuitry 30_1 or to the second receiver circuitry 30_2. In at least some examples, the second switching circuitry 55_2 is configured to selectively de-couple the second transmitter circuitry 20_2 from the first receiver circuitry 30_1 and from the second receiver circuitry 30_2.

FIG 4, illustrates an example of the apparatus and switching circuitry 55 illustrated in FIG 3. In this example, the first switching circuit 55_1 and the second switching circuit 55_2 are provided using first transmit (Tx) switch circuitry 54_1, second Tx switch circuitry 54_2, first receive (Rx) switch circuitry 56_1, and second Rx switch circuitry 56_2.

The first Tx switch circuitry 54_1 is configured to selectively couple the first transmitter circuitry 20_1 towards the first receiver circuitry 30_1 or the second receiver circuitry 30_2. The second Tx switch circuitry 54_2 is configured to selectively couple the second transmitter circuitry 20_2 towards the first receiver circuitry 30_1 or the second receiver circuitry 30_2. The first Rx switch circuitry 56_1 is configured to selectively couple the first receiver circuitry 30_1 towards the first transmitter circuitry 20_1 or the second transmitter circuitry 20_2. The second Rx switch circuitry 56_2 is configured to selectively couple the second receiver circuitry 30_2 towards the first transmitter circuitry 20_1 or the second transmitter circuitry 20_2.

The first transmitter circuitry 20_1 is coupled with the first receiver circuitry 30_1 when the first Tx switch circuitry 54_1 is configured to selectively couple the first transmitter circuitry 20_1 towards the first receiver circuitry 30_1 and the first Rx switch circuitry 56_1 is configured to selectively couple the first receiver circuitry 30_1 towards the first transmitter circuitry 20_1.

The first transmitter circuitry 20_1 is coupled with the second receiver circuitry 30_2 when the first Tx switch circuitry 54_1 is configured to selectively couple the first transmitter circuitry 20_1 towards the second receiver circuitry 30_2 and the second Rx switch circuitry 56_2 is configured to selectively couple the second receiver circuitry 30_2 towards the first transmitter circuitry 20_1.

The second transmitter circuitry 20_2 is coupled with the first receiver circuitry 30_1 when the second Tx switch circuitry 54_2 is configured to selectively couple the second transmitter circuitry 20_2 towards the first receiver circuitry 30_1 and the first Rx switch circuitry 56_1 is configured to selectively couple the first receiver circuitry 30_1 towards the second transmitter circuitry 20_2.

The second transmitter circuitry 20_2 is coupled with the second receiver circuitry 30_2 when the second Tx switch circuitry 54_2 is configured to selectively couple the second transmitter circuitry 20_2 towards the second receiver circuitry 30_2 and the second Rx switch circuitry 56_2 is configured to selectively couple the second receiver circuitry 30_2 towards the second transmitter circuitry 20_2.

In some examples, the first transmitter circuitry 20_1 is de-coupled from the first receiver circuitry 30_1 and second receiver circuitry 30_2 when the first Tx switch circuitry 54_1 is configured to selectively couple the first transmitter circuitry 20_1 towards the first receiver circuitry 30_1 and the first Rx switch circuitry 56_1 is configured to selectively couple the first receiver circuitry 30_1 towards the second transmitter circuitry 20_2. In other examples, the first transmitter circuitry 20_1 is de-coupled from the first receiver circuitry 30_1 and second receiver circuitry 30_2 when the first Tx switch circuitry 54_1 is configured to selectively couple the first transmitter circuitry 20_1 towards the second receiver circuitry 30_2 and the second Rx switch circuitry 56_2 is configured to selectively couple the second receiver circuitry 30_2 towards the second transmitter circuitry 20_2.

In some examples, the second transmitter circuitry 20_2 is de-coupled from the first receiver circuitry 30_1 and second receiver circuitry 30_2 when the second Tx switch circuitry 54_2 is configured to selectively couple the second transmitter circuitry 20_2 towards the second receiver circuitry 30_2 and second Rx switch circuitry 56_2 is configured to selectively couple the second receiver circuitry 30_2 towards the first transmitter circuitry 20_1. In other examples, the second transmitter circuitry 20_2 is de-coupled from the first receiver circuitry 30_1 and second receiver circuitry 30_2 when the second Tx switch circuitry 54_2 is configured to selectively couple the second transmitter circuitry 20_2 towards the first receiver circuitry 30_1 and first Rx switch circuitry 56_1 is configured to selectively couple the first receiver circuitry 30_1 towards the first transmitter circuitry 20_1.

The first transmitter circuitry 20_1 is coupled with the first receiver circuitry 30_1 and the second transmitter circuitry 20_2 is simultaneously coupled to the second receiver circuitry 30_2 when the first Tx switch circuitry 54_1 is configured to selectively couple the first transmitter circuitry 20_1 towards the first receiver circuitry 30_1, the first Rx switch circuitry 56_1 is configured to selectively couple the first receiver circuitry 30_1 towards the first transmitter circuitry 20_1, the second Tx switch circuitry 54_2 is configured to selectively couple the second transmitter circuitry 20_2 towards the second receiver circuitry 30_2 and the second Rx switch circuitry 56_2 is configured to selectively couple the second receiver circuitry 30_2 towards the second transmitter circuitry 20_2.

The first transmitter circuitry 20_1 is coupled with the second receiver circuitry 30_2 and the second transmitter circuitry 20_2 is simultaneously coupled to the first receiver circuitry 30_1 when the first Tx switch circuitry 54_1 is configured to selectively couple the first transmitter circuitry 20_1 towards the second receiver circuitry 30_2; the second Rx switch circuitry 56_2 is configured to selectively couple the second receiver circuitry 30_2 towards the first transmitter circuitry 20_1; the second Tx switch circuitry 54_2 is configured to selectively couple the second transmitter circuitry 20_2 towards the first receiver circuitry 30_1; and the first Rx switch circuitry 56_1 is configured to selectively couple the first receiver circuitry 30_1 towards the second transmitter circuitry 20_2.

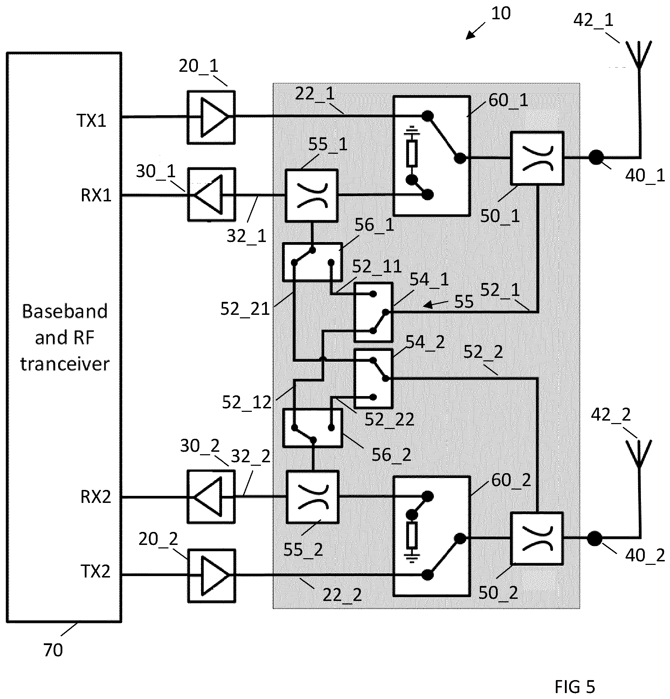

FIG 5 illustrates an example of the apparatus 10 as previously described. In this example, a first antenna 42_1 is coupled to the first antenna port 40_1 and a second antenna 42_2 is coupled to the second antenna port 40_2. A baseband and radio frequency transceiver circuitry 70 is coupled to the first transmitter circuitry 20_1, the first receiver circuitry 30_1, the second transmitter circuitry 20_2, and the second receiver circuitry 30_2.

A first out-coupler 50_1, for example a directional coupler, couples a signal transmitted by the first transmitter 20_1 from the first transmission path 22_1 onto first out-coupled path 52_1 which terminates at the input to a first Tx switch 54_1.

A second out-coupler 50_2, for example a directional coupler, couples a signal transmitted by the second transmitter 20_2 from the second transmission path 22_2 onto second out-coupled path 52_2 which terminates at the input to a second Tx switch 54_2.

A first in-coupler 55_1, for example a directional coupler, couples a first reception path 32_1 to the first receiver circuitry 30_1, with the switched output from the first Rx switch 56_1. A second in-coupler 55_2, for example a directional coupler, couples a second reception path 32_2 to the second receiver circuitry 30_2, with the switched output from the second Rx switch 56_2.

A first time-division-duplex (TDD) switch 60_1, which is optional, is used to switch the first antenna 42_1 between the first transmitter circuitry 20_1 and the first receiver circuitry 30_1. A second time-division-duplex (TDD) switch 60_2, which is optional, is used to switch the second antenna 42_2 between the second transmitter circuitry 20_2 and the second receiver circuitry 30_2.

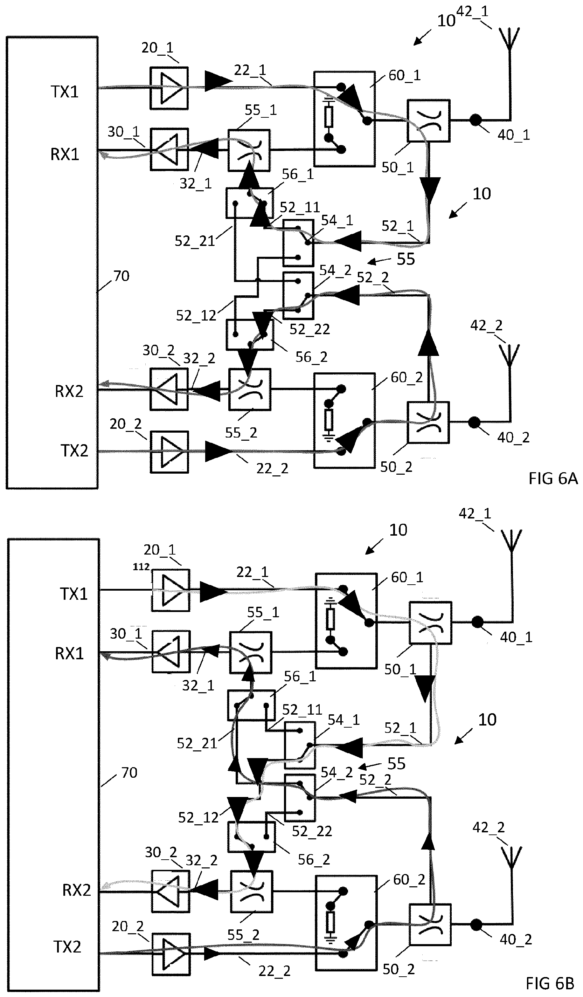

FIG 6A illustrates operation of the circuitry illustrated in FIG 5. The dark arrows illustrate coupling paths. One coupling path extends from the first transmitter circuitry 20_1 to the first receiver circuitry 30_1 and an independent and separate path extends from the second transmitter circuitry 20_2, simultaneously, to the second receiver circuitry 30_2.

The first transmitter circuitry 20_1 is coupled with the first receiver circuitry 30_1 and the second transmitter circuitry 20_2 is simultaneously coupled to the second receiver circuitry 30_2 when the first Tx switch circuitry 54_1 is configured to selectively couple the first transmitter circuitry 20_1 towards the first Rx switch circuitry 56_1, the first Rx switch circuitry 56_1 is configured to selectively couple the first receiver circuitry 30_1 towards the first Tx switch circuitry 54_1, and the second Tx switch circuitry 54_2 is configured to selectively couple the second transmitter circuitry 20_2 towards the second Rx switch circuitry 56_2 and the second Rx switch circuitry 56_2 is configured to selectively couple the second receiver circuitry 30_2 towards the second Tx switch circuitry 54_2.

FIG 6B illustrates operation of the circuitry illustrated in FIG 5. FIG 6B illustrates operation of the circuitry illustrated in FIG 6A but at a different time. The dark arrows illustrate coupling paths. One coupling path, indicated by larger dark arrows, extends from the first transmitter circuitry 20_1 to the second receiver circuitry 30_2 and an independent and separate coupling path, indicated by smaller dark arrows, extends from the second transmitter circuitry 20_2, simultaneously, to the first receiver circuitry 30_1.

The first transmitter circuitry 20_1 is coupled with the second receiver circuitry 30_2 and the second transmitter circuitry 20_2 is simultaneously coupled to the first receiver circuitry 30_1 when the first Tx switch circuitry 54_1 is configured to selectively couple the first transmitter circuitry 20_1 towards the second Rx switch circuitry 56_2; the second Rx switch circuitry 56_2 is configured to selectively couple the second receiver circuitry 30_2 towards the first Tx switch circuitry 54_1; and the second Tx switch circuitry 54_2 is configured to selectively couple the second transmitter circuitry 20_2 towards the first Rx switch circuitry 56_1; and the first Rx switch circuitry 56_1 is configured to selectively couple the first receiver circuitry 30_1 towards the second Tx switch circuitry 54_2.

In at least some examples, different transmitter circuitry 20 provide different paths 22 to antenna ports 40 and different receiver circuitry 30 comprise different paths 32 from antenna ports 40. At least some of the transmitter circuitry 20 share a power amplifier that is switched to different paths 32/different antenna ports 40. The different receiver circuitry 30 have distinct different low noise amplifiers.

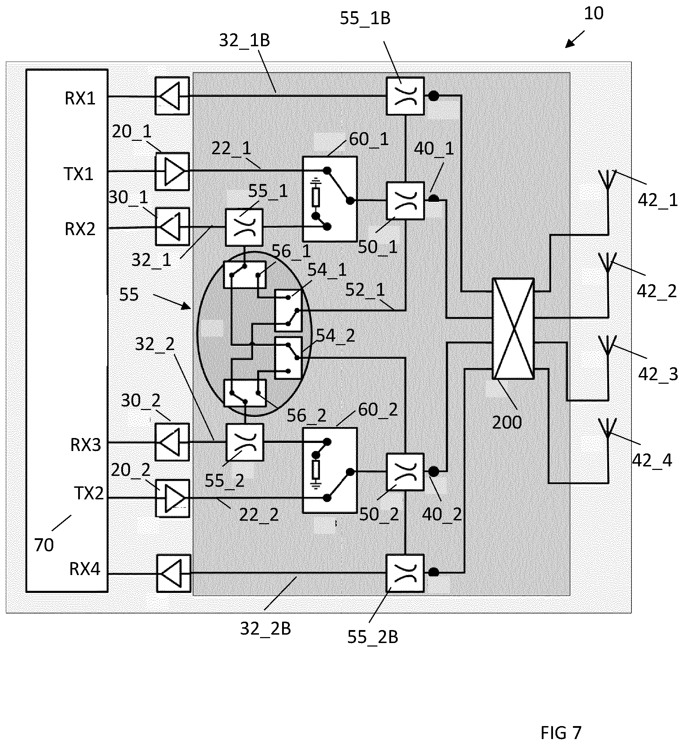

For example, in the example illustrated in FIG 7, there are four antenna 42_1, 42_2, 42_3, 42_4 and four corresponding reception paths 32_1, 32_1B, 32_2, 32_2B for input to the baseband and radio frequency transceiver circuitry 70.

An antenna selector switch 200 selects which antennas are coupled to which reception paths 32.

The out-coupler 50_1 not only couples to the switching circuitry 55 (as previously described with reference to FIG 5) but additionally couples to an in-coupler 55_1B which couples to the reception path 32_1B.

The out-coupler 50_2 not only couples to the switching circuitry 55 (as previously described with reference to FIG 5) but additionally couples to an in-coupler 55_2B which couples to the reception path 32_2B.

Compared to the apparatus 10 illustrated in FIG 5, the apparatus 10 illustrated in FIG 7 is asymmetric in that it supports simultaneous operation of more receiver channels (simultaneously in-use receiver paths 32) than transmitter channels (simultaneously in-use transmitter paths 22).

In at least some examples, the apparatus 10 is asymmetric because it comprises more low noise amplifiers than power amplifiers.

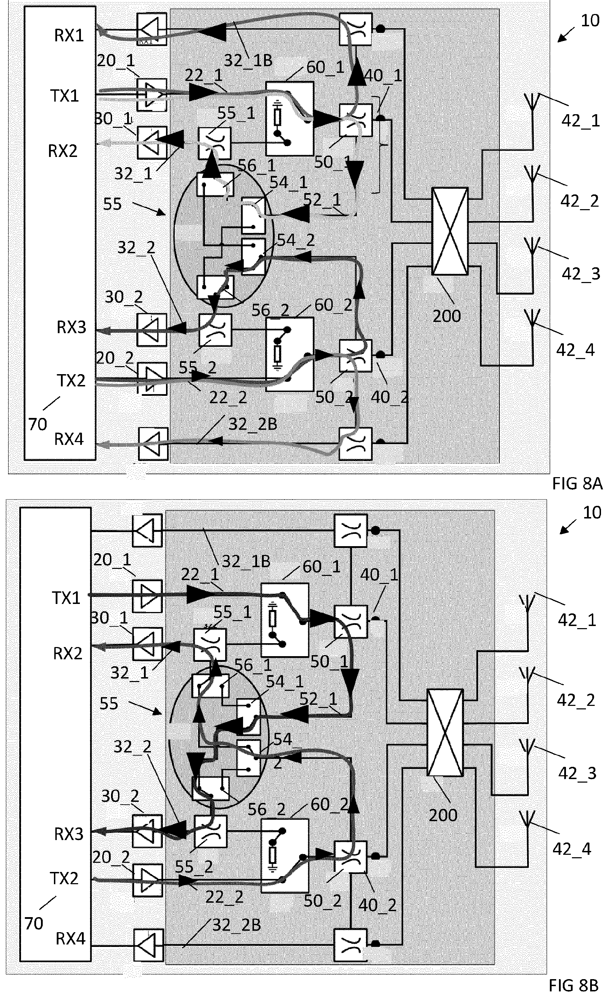

FIGs 8A and 8B illustrate operation of the apparatus 10 shown in FIG 7. In FIG 8A, the first transmission path 22_1 is coupled simultaneously to both the first reception path 32_1 and the reception path 32_1B. The switching circuit 55 (first Tx switch circuitry 54_1, first Rx switch circuit 56_1) couples the first transmission path 22_1 to the first reception path 32_1. The second transmission path 22_2 is coupled simultaneously to both the second reception path 32_2 and the reception path 32_2B. The switching circuit 55 (second Tx switch circuitry 54_2, second Rx switch circuit 56_2) couples the second transmission path 22_2 to second reception path 32_2. In FIG 8B, the first transmission path 22_1 is coupled to the second reception path 32_2. The second transmission path 22_2 is coupled to the first reception path 32_1. The switching circuit 55 (first Tx switch circuity 54_1, second Rx switch circuit 56_2) couples the first transmission path 22_1 to the second reception path 32_2. The second transmission path 22_2 is coupled simultaneously to both the first reception path 32_1 and the reception path 32_2B. The switching circuit 55 (second Tx switch circuity 54_2, first Rx switch circuit 56_1) couples the second transmission path 22_2 to first reception path 32_1.

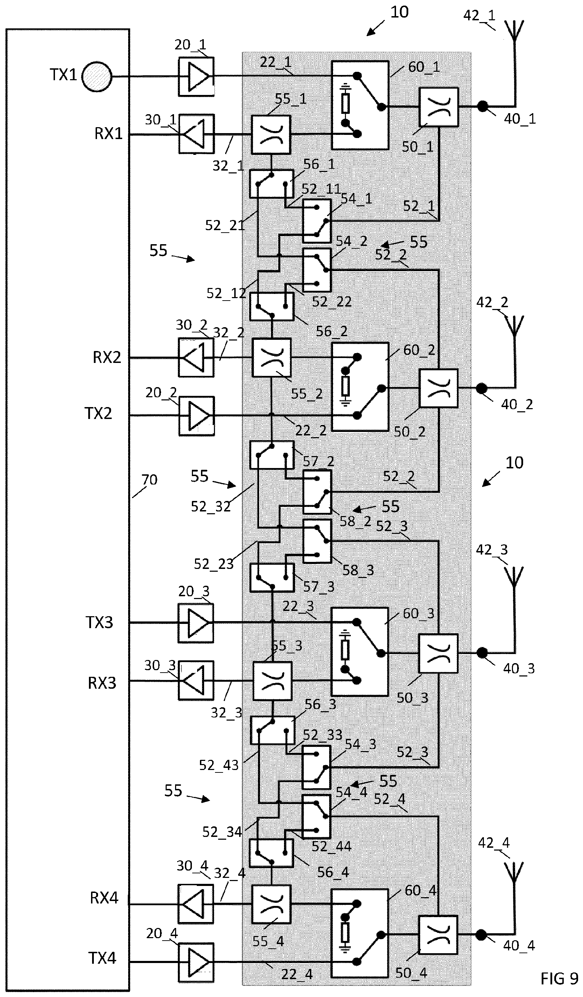

FIG 9 extends the example described in FIG 6 to additional transmitter circuitry and receiver circuitry. The upper portion of FIG 9 reproduces the circuitry previously described with reference to FIG 5, 6A, 6B.

The lower upper portion of FIG 9 illustrates circuitry similar to that previously described with reference to FIG 5, 6A, 6B. The circuitry is different in that third transmitter circuitry 20_3 replaces the first transmitter circuitry 20_1 of FIG 5, 6A, 6B, that fourth transmitter circuitry 20_4 replaces the second transmitter circuitry 20_2 of FIG 5, 6A, 6B, that third receiver circuitry 30_3 replaces the first receiver circuitry 30_1 of FIG 5, 6A, 6B, that fourth receiver circuitry 30_4 replaces the second receiver circuitry 30_2 of FIG 5, 6A, 6B, the third antenna 42_3 replaces the first antenna 42_1 of FIG 5, 6A, 6B, the third antenna port 40_3 replaces the first antenna port 40_1 of FIG 5, 6A, 6B fourth antenna 42_4 replaces the second antenna 42_2 of FIG 5, 6A, 6B and the fourth antenna port 40_4 replaces the second antenna port 40_2 of FIG 5, 6A, 6B.

A third transmission path 22_3 extends from the third transmitter circuitry 20_3 to the third antenna port 40_3 via a third TDD switch 60_3 and a third reception path 32_3 extends towards the third receiver circuitry 30_3 from the third antenna port 40_3 via the third TDD switch 60_3. A fourth transmission path 22_4 extends from the fourth transmitter circuitry 20_4 to the fourth antenna port 40_4 via a fourth TDD switch 60_4 and a fourth reception path 32_4 extends towards the fourth receiver circuitry 30_4 from the fourth antenna port 40_4 via a fourth TDD switch 60_4.

A third out-coupler 50_3, for example a directional coupler, is configured to couple a signal transmitted by the third transmitter circuitry 20_3 from the third transmission path 22_3 onto a third out-coupled path 52_3 which terminates at the input to third Tx switch circuitry 54_3. A fourth out-coupler 50_4, for example a directional coupler, couples a signal transmitted by the fourth transmitter 20_4 from the fourth transmission path 22_4 onto a fourth out-coupled path 52_4 which terminates at the input to a fourth Tx switch circuitry 54_4.

A third in-coupler 55_3, for example a directional coupler, couples a third reception path 32_3 to the third receiver circuitry 30_3, with a switched output from a third Rx switch circuitry 56_3. A fourth in-coupler 55_4, for example a directional coupler, couples a fourth reception path 32_4 to the fourth receiver circuitry 30_4, with the switched output from the fourth Rx switch circuitry 56_4. A third time-division-duplex (TDD) switch 60_3, which is optional, is used to switch the third antenna 42_3 between the third transmitter circuitry 20_3 and the third receiver circuitry 30_3. A fourth time-division-duplex (TDD) switch 60_4, which is optional, is used to switch the fourth antenna 42_4 between the fourth transmitter circuitry 20_4 and the fourth receiver circuitry 30_4.

The apparatus can configure a coupling path that extends from the third transmitter circuitry 20_3 to the third receiver circuitry 30_3. The third Tx switch circuitry 54_3 is configured to selectively couple the third transmitter circuitry 20_3 towards the third Rx switch circuitry 56_3 and the third Rx switch circuitry 56_3 is configured to selectively couple the third receiver circuitry 30_3 towards the third Tx switch circuitry 54_3.

The apparatus can configure a coupling path that extends from the fourth transmitter circuitry 20_4 to the fourth receiver circuitry 30_4. The fourth Tx switch circuitry 54_4 is configured to selectively couple the fourth transmitter circuitry 20_4 towards the fourth Rx switch circuitry 56_4 and the fourth Rx switch circuitry 56_4 is configured to selectively couple the fourth receiver circuitry 30_4 towards the fourth Tx switch circuitry 54_4.

The apparatus can simultaneously couple the third transmitter circuitry 20_3 to the third receiver circuitry 30_3 and the fourth transmitter circuitry 20_4 to the fourth receiver circuitry 30_4.

The apparatus can configure a coupling path that extends from the third transmitter circuitry 20_3 to the fourth receiver circuitry 30_4. The third Tx switch circuitry 54_3 is configured to selectively couple the third transmitter circuitry 20_3 towards the fourth Rx switch circuitry 56_4 and the fourth Rx switch circuitry 56_4 is configured to selectively couple the fourth receiver circuitry 30_4 towards the third Tx switch circuitry 54_3.

The apparatus can configure a coupling path that extends from the fourth transmitter circuitry 20_4 to the third receiver circuitry 30_3. The fourth Tx switch circuitry 54_4 is configured to selectively couple the fourth transmitter circuitry 20_4 towards the third Rx switch circuitry 56_3 and the third Rx switch circuitry 56_3 is configured to selectively couple the third receiver circuitry 30_3 towards the fourth Tx switch circuitry 54_4.

The apparatus can simultaneously couple the third transmitter circuitry 20_3 to the fourth receiver circuitry 30_4 and the fourth transmitter circuitry 20_4 to the third receiver circuitry 30_3.

The apparatus can configure a coupling path that extends from the second transmitter circuitry 20_2 to the third receiver circuitry 30_3. This is between (inter) transceivers. The second out-coupler 50_2 is configured to couple a signal transmitted by the second transmitter circuitry 20_2 from the second transmission path 22_2 onto a second out-coupled path 52_2 which terminates at an input to inter Tx switch circuitry 58_2. The third in-coupler 55_3 is configured to couple the third reception path 32_3 (to the third receiver circuitry 30_3), with a switched output from the inter Rx switch circuitry 57_3.

The apparatus can configure a coupling path that extends from the third transmitter circuitry 20_3 to the second receiver circuitry 30_2. This is between (inter) transceivers. The third out-coupler 50_3 is configured to couple a signal transmitted by the third transmitter circuitry 20_3 from the third transmission path 22_3 onto a third out-coupled path 52_3 which terminates at an input to inter Tx switch circuitry 58_3. The in-coupler 55_2 is configured to couple the second reception path 32_2 (to the second receiver circuitry 30_2), with a switched output from the inter Rx switch circuitry 57_2.

The apparatus 10 can therefore be used to determine the combined transfer functions:

mutual combined transfer functions: M(1,1), M(2,2); M(3,3), M(4,4)
(inter-transceiver) cross combined transfer functions: M(1,2), M(2,1); M(3,4), M(4,3);
(inter-transceiver) cross combined transfer functions: M(2,3), M(3,2);

The following reception calibration parameters can be determined:

$$R(Rx, 1, 2) = M(1, 1) / M(1, 2) = gTx1^* gRx1 / gTx1^* gRx2 = gRx1 / gRx2$$

$$R(Rx, 2, 3) = M(2, 2) / M(2, 3) = gTx2^* gRx2 / gTx2^* gRx3 = gRx2 / gRx3$$

$$R(Rx, 3, 4) = M(3, 3) / M(3, 4) = gTx3^* gRx3 / gTx3^* gRx4 = gRx3 / gRx4$$

The following transmission calibration parameters can be determined:

$$R(Tx, 1, 2) = M(1, 1) / M(2, 1) = gTx1^* gRx1 / gTx2^* gRx1 = gTx1 / gTx2$$

$$R(Tx, 2, 3) = M(2, 2) / M(3, 2) = gTx2^* gRx2 / gTx3^* gRx2 = gTx2 / gTx3$$

$$R(Tx, 3, 4) = M(3, 3) / M(4, 3) = gTx3^* gRx3 / gTx4^* gRx3 = gTx3 / gTx4$$

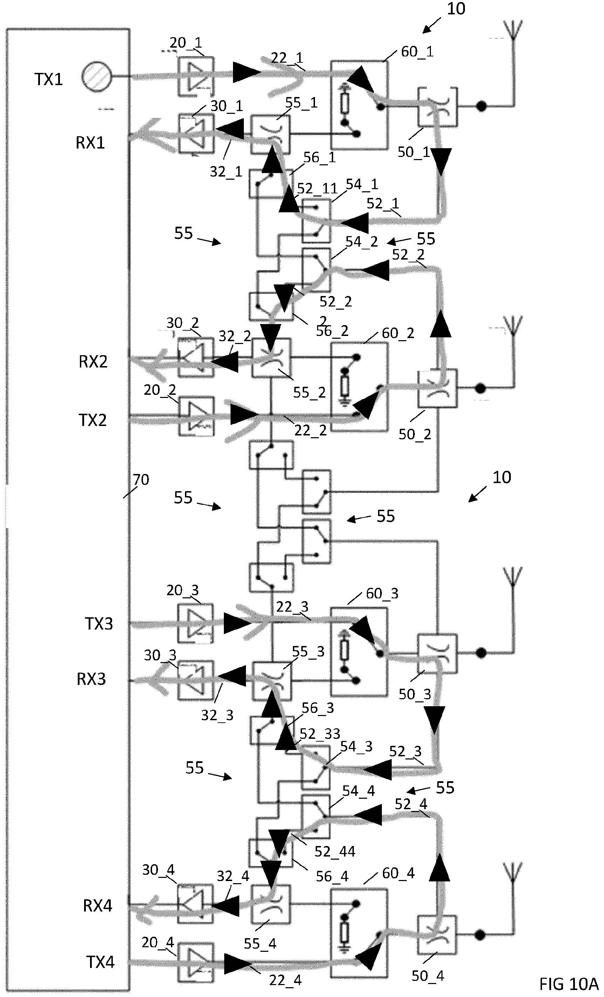

FIG 10A illustrates operation of the circuitry illustrated in FIG 9. The dark arrows illustrate coupling paths. One coupling path extends from the first transmitter circuitry 20_1 to the first receiver circuitry 30_1, an independent and separate coupling path extends from the second transmitter circuitry 20_2, simultaneously, to the second receiver circuitry 30_2, an independent and separate coupling path extends from the third transmitter circuitry 20_3, simultaneously, to the third receiver circuitry 30_3, an independent and separate coupling path extends from the fourth transmitter circuitry 20_4, simultaneously, to the fourth receiver circuitry 30_4.

The first Tx switch circuitry 54_1 is configured to selectively couple the first transmitter circuitry 20_1 towards the first Rx switch circuitry 56_1. The first Rx switch circuitry 56_1 is configured to selectively couple the first receiver circuitry 30_1 towards the first Tx switch circuitry 54_1.

The second Tx switch circuitry 54_2 is configured to selectively couple the second transmitter circuitry 20_2 towards the second Rx switch circuitry 56_2. The second Rx switch circuitry 56_2 is configured to selectively couple the second receiver circuitry 30_2 towards the second Tx switch circuitry 54_2.

The third Tx switch circuitry 54_3 is configured to selectively couple the third transmitter circuitry 20_3 towards the third Rx switch circuitry 56_3. The third Rx switch circuitry 56_3 is configured to selectively couple the third receiver circuitry 30_3 towards the third Tx switch circuitry 54_3.

The fourth Tx switch circuitry 54_4 is configured to selectively couple the fourth transmitter circuitry 20_4 towards the fourth Rx switch circuitry 56_4. The fourth Rx switch circuitry 56_4 is configured to selectively couple the fourth receiver circuitry 30_4 towards the fourth Tx switch circuitry 54_4.

This enables the measurement of M(1, 1), M(2, 2), M(3, 3), M(4, 4). M(1, 1) = gTx1* gRx1; M(2, 2) = gTx2* gRx2; M(3, 3) = gTx3* gRx; M(4, 4) = gTx4* gRx4.

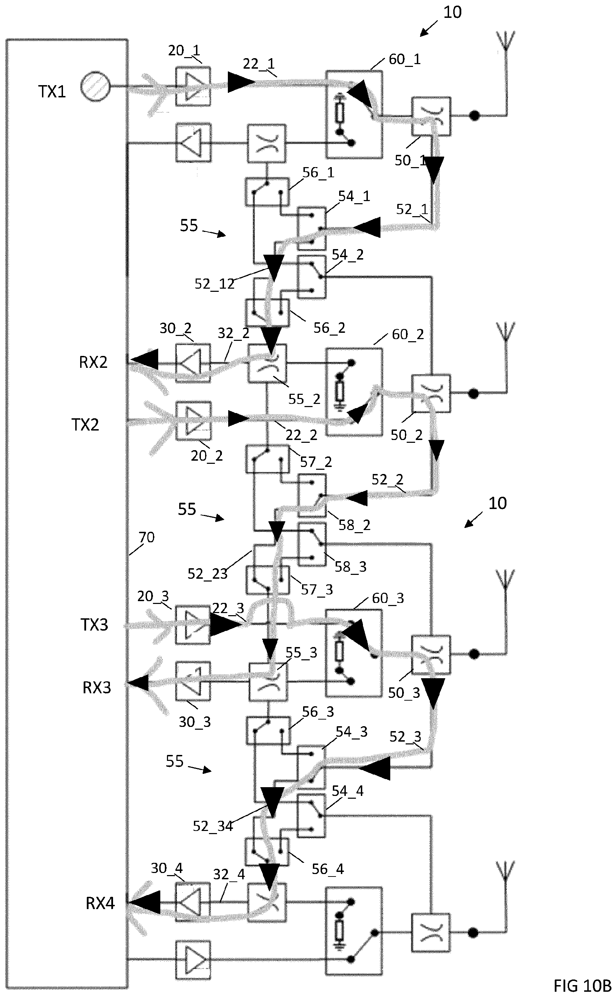

FIG 10B illustrates operation of the circuitry illustrated in FIG 9. FIG 10B illustrates operation of the circuitry illustrated in FIG 10A but at a different time. The dark arrows illustrate coupling paths. One coupling path, indicated by larger dark arrows, extends from the first transmitter circuitry 20_1 to the second receiver circuitry 30_2. One coupling path, indicated by smaller dark arrows, extends from the second transmitter circuitry 20_2 to the third receiver circuitry 30_3. One coupling path, indicated by larger dark arrows, extends from the third transmitter circuitry 20_3 to the fourth receiver circuitry 30_4.

The first transmitter circuitry 20_1 is coupled with the second receiver circuitry 30_2, the second transmitter circuitry 20_2 is simultaneously coupled to the third receiver circuitry 30_3 and the third transmitter circuitry 20_3 is simultaneously coupled to the fourth receiver circuitry 30_4.

The switch circuitry 54_1, 56_2 is configured to selectively couple the first transmitter circuitry 20_1 to the second receiver circuitry 30_2. The switch circuitry 58_2, 57_3 is configured to selectively couple the second transmitter circuitry 20_2 towards the third receiver circuitry 30_3. The switch circuitry 54_3, 56_4 is configured to selectively couple the third transmitter circuitry 20_3 towards the fourth receiver circuitry 30_4. The switch circuitry 54_4, 56_3 is configured to selectively de-couple the fourth transmitter circuitry 20_4 from the third receiver circuitry 30_3. The switch circuitry 58_3, 57_2 is configured to selectively de-couple the third transmitter circuitry 20_3 from the second receiver circuitry 30_2. The switch circuitry 54_2, 56_1 is configured to selectively de-couple the second transmitter circuitry 20_2 from the first receiver circuitry 30_1.

This enables the measurement of M(1, 2), M(2, 3), M(3, 4): M(1, 2)= gTx1*gRx2; M(2, 3)= gTx2*gRx3; M(3, 4)= gTx3*gRx4.

It is therefore possible by using the coupling paths illustrated in FIGs 10A and 10B to determine R(Rx, 1, 2), R(Rx, 2, 3), R(Rx, 3, 4).

$$R(Rx, 1, 2)= M(1, 1) / M(1, 2) = gTx1* gRx1 / gTx1* gRx2 = gRx1 /gRx2$$

$$R(Rx, 2, 3)= M(2, 2) / M(2, 3) = gTx2* gRx2 / gTx2* gRx3 = gRx2 /gRx3$$

$$R(Rx, 3, 4)= M(3, 3) / M(3, 4) = gTx3* gRx3 / gTx3* gRx4 = gRx3 /gRx4$$

Referring to FIG 10B, by changing the configuration of switches it is possible to measure

$$M(4, 3), M(3, 2), M(2, 1): M(2, 1)= gTx2*gRx1; M(3, 2)= gTx3*gRx2; M(4, 3)= gTx4*gRx4.$$

The switch circuitry 54_4, 56_3 is configured to selectively couple the fourth transmitter circuitry 20_4 to the third receiver circuitry 30_3. The switch circuitry 58_3, 57_2 is configured to selectively couple the third transmitter circuitry 20_3 towards the second receiver circuitry 30_2. The switch circuitry 54_2, 56_1 is configured to selectively couple the second transmitter circuitry 20_2 towards the first receiver circuitry 30_1.

The switch circuitry 54_1, 56_2 is configured to selectively de-couple the first transmitter circuitry 20_1 from the second receiver circuitry 30_2. The switch circuitry 58_2, 57_3 is configured to selectively de-couple the second transmitter circuitry 20_2 from the third receiver circuitry 30_3. The switch circuitry 54_3, 56_4 is configured to selectively de-couple the third transmitter circuitry 20_3 from the fourth receiver circuitry 30_4. It is therefore possible by using the coupling paths illustrated in FIG 10A to determine R(Tx, 1, 2), R(Tx, 2, 3), R(Tx, 3, 4).

The following transmission calibration parameters can be determined:

$$R(Tx, 1, 2)= M(1, 1) / M(2, 1) = gTx1* gRx1 / gTx2* gRx1 = gTx1 /gTx2$$

$$R(Tx, 2, 3)= M(2, 2) / M(3, 2) = gTx2* gRx2 / gTx3* gRx2 = gTx2 /gTx3$$

$$R(Tx, 3, 4)= M(3, 3) / M(4, 3) = gTx3* gRx3 / gTx4* gRx3 = gTx3 /gTx4$$

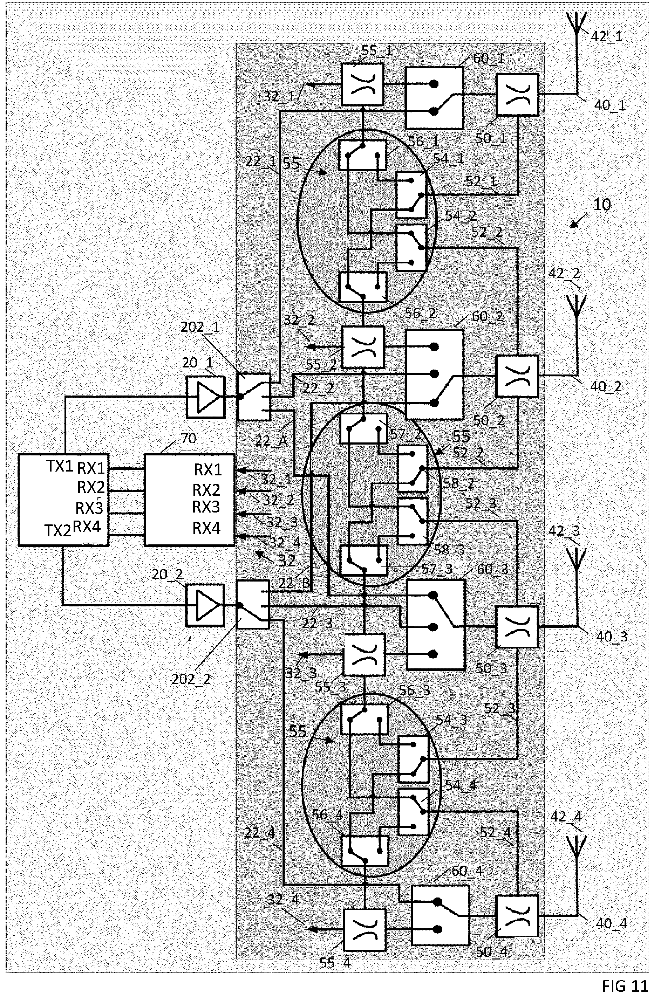

In the example illustrated in FIG 11, there are four antenna 42_1, 42_2, 42_3, 42_4 and four corresponding reception paths 32_1, 32_2, 32_3, 32_4 (labeled as 32 at input to the baseband and radio frequency transceiver circuitry 70).

There is a transmitter circuitry 20_1 and second transmitter circuitry 20_2. Each transmitter circuitry 20 can be switched to one of multiple transmitter paths 22 by input Tx switching circuitry 202. In some examples, a multiplexer can be used for input Tx switching circuitry 202. The multiplexer can switch different transmitter circuitry 20_i to different first transmitter paths 22_j (to antenna 42_j. In the illustrated example,
the first transmitter circuitry 20_1 is coupled via the first input Tx switching circuitry 202_1 to one of: the first transmitter path 22_1 (to antenna 42_1), the second transmitter path 22_2 (to antenna 42_2), and transmitter path 22_A (to antenna 42_3). The second transmitter circuitry 20_2 is coupled via the second input Tx switching circuitry 202_2 to one of: the transmitter path 22_B (to antenna 42_2), the third transmitter path 22_3 (to antenna 42_3), and the fourth transmitter path 22_4 (to antenna 42_4).

The switch 60_2, for the antenna 42_2, couples to the second reception path 32_2, the first transmitter circuitry 20_1, or the second transmitter circuitry 20_2. The switch 60_3, for the antenna 42_3, couples to the third reception path 32_3, the first transmitter circuitry 20_1, or the second transmitter circuitry 20_2.

At least some of the transmitter paths 22 share a power amplifier that is switched to different paths 32/different antenna ports 40.

The different receiver circuitry 30 have distinct different low noise amplifiers.

The apparatus 10 is asymmetric in that it supports simultaneous operation of more receiver channels (simultaneously in-use receiver paths 32) than transmitter channels. (simultaneously in-use transmitter paths 22).

The apparatus 10 is asymmetric because it comprises more receive paths 32 than transmit paths 22. It can for example, comprise more low noise amplifiers than power amplifiers.

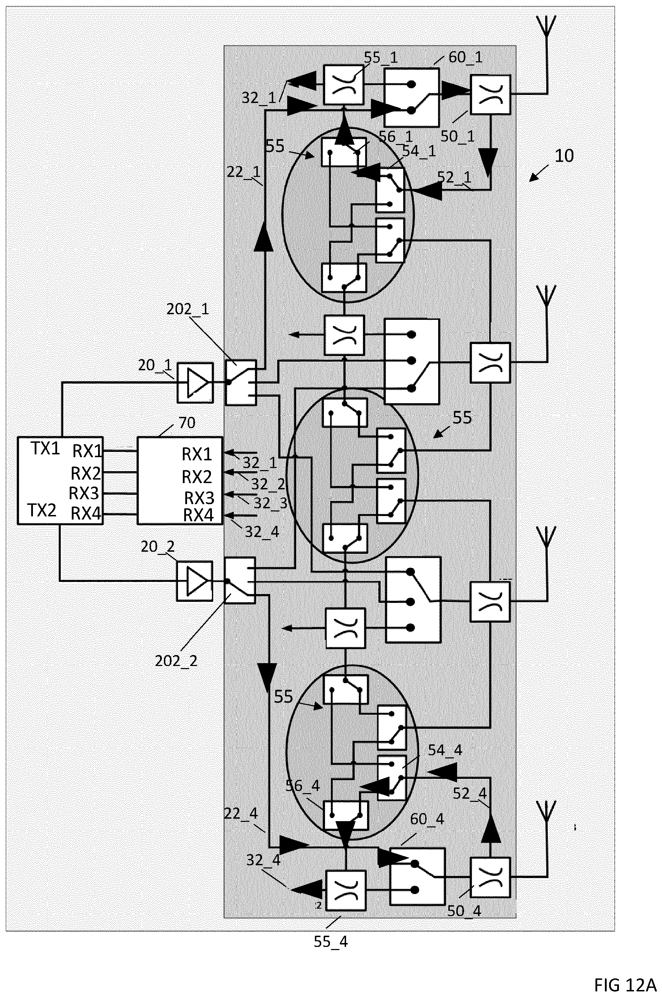

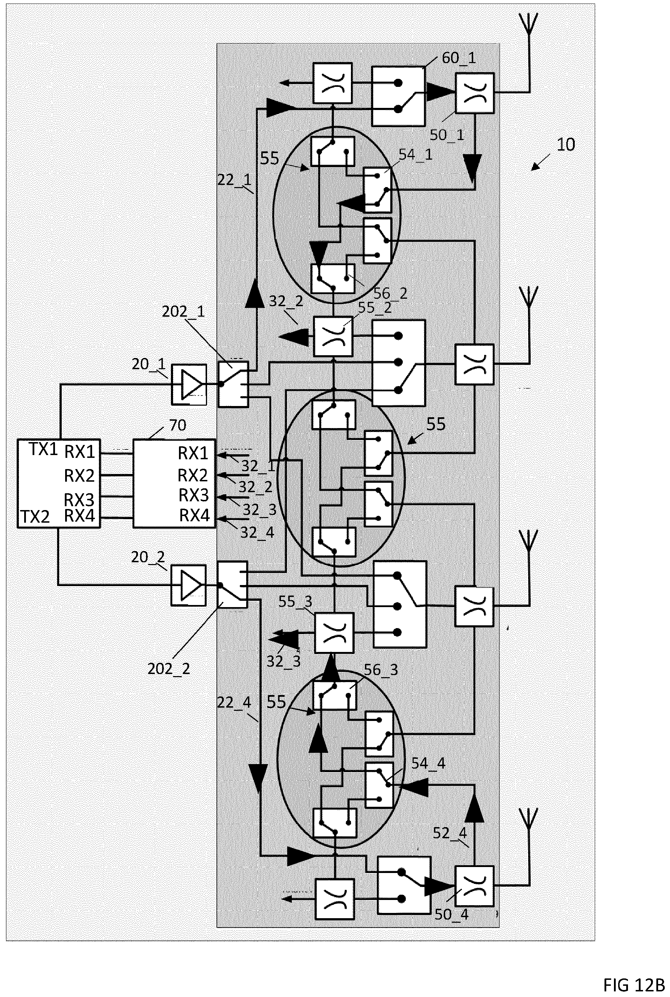

FIG 12A and 12B illustrate operation of the apparatus 10 illustrated in FIG 11. In FIG 12A, the first transmitter circuitry 20_1 is coupled to the first reception path 32_1 via the first transmitter path 22_1, out-coupler 50_1, switching circuitry 55 (Tx switch circuity 54_1, Rx switch circuitry 56_1) and in-coupler 55_1.

The second transmitter circuitry 20_2 is coupled to the fourth reception path 32_4 via the second transmitter path 22_4, out-coupler 50_4, switching circuitry 55 (Tx switch circuity 54_4, Rx switch circuitry 56_4) and in-coupler 55_4.

In FIG 12B, the first transmitter circuitry 20_1 is coupled to the second reception path 32_2 via the second transmitter path 22_1, out-coupler 50_1, switching circuitry 55 (Tx switch circuity 54_1, Rx switch circuitry 56_2) and in-coupler 55_2. The second transmitter circuitry 20_2 is coupled to the third reception path 32_3 via the second transmitter path 22_4, out-coupler 50_4, switching circuitry 55 (Tx switch circuity 54_4, Rx switch circuitry 56_3) and in-coupler 55_3.

The following table illustrates different routes to calibration using the apparatus 10 of FIG 11. The table illustrates the first transmitter circuitry 20_1 (Tx1) and the second transmitter circuitry 20_2 (Tx2) being coupled to different antennas ports 40_i or antennas 42_i for calibration (columns 1 and 4). The coupling of the first transmitter circuitry 20_1 (Tx1) to a particular antenna port 40_i for calibration (column 1) makes different reception paths available (column 2) and respective transfer functions can be measured (column 3). The coupling of the second transmitter circuitry 20_2 (Tx2) to a particular antenna port 40_j for calibration (column 4) makes different reception paths available (column 5) and respective transfer functions can be measured (column 6). In some examples full calibration is achievable (column 7). In some examples, full calibration is not achievable using a single result and a further result is required.

| first transmitter circuitry 20_1 (Tx1) | Available reception circuitry 30_i (Rxi) for Tx1 | M(1, j) | second transmitter circuitry 20_2 (Tx2) | Available reception circuitry 30_j (Rxj) for Tx2 | M(2, j) | Result |
|---|---|---|---|---|---|---|
| 40_1 | Rx1 | gTx1*gRx1 | 40_4 | Rx3 | gTx2*gRx3 | separate calibration |
| | Rx2 | gTx1*gRx2 | | Rx4 | gTx2*gRx4 | |
| | | | | | | |
| 40_1 | Rx1 | gTx1*gRx1 | 40_3 | Rx2 | gTx2*gRx2 | Full calibration achievable |
| | Rx2 | gTx1*gRx2 | | Rx3 | gTx2*gRx3 | |
| | | | | Rx4 | gTx2*gRx4 | |
| | | | | | | |
| 40_1 | Rx1 | gTx1*gRx1 | 40_2 | Rx1 | gTx2*gRx1 | No Rx4 mea-surement pos-sible |
| | Rx2 | gTx1*gRx2 | | Rx2 | gTx2*gRx2 | |

(continued)

| first transmitter circuitry 20_1 (Tx1) | Available reception circuitry 30_i (Rxi) for Tx1 | M(1, j) | second transmitter circuitry 20_2 (Tx2) | Available reception circuitry 30_j (Rxj) for Tx2 | M(2, j) | Result |
|---|---|---|---|---|---|---|
| | | | | Rx3 | gTx2*gRx3 | |
| | | | | | | |
| 40_2 | Rx1 | qTx1*qRx1 | 40_3 | Rx2 | qTx2*qRx2 | Full calibration achievable |
| | Rx2 | gTx1*gRx2 | | Rx3 | gTx2*gRx3 | |
| | Rx3 | gTx1*gRx3 | | Rx4 | gTx2*gRx4 | |
| | | | | | | |
| 40_2 | Rx1 | gTx1*gRx1 | 40_4 | Rx3 | gTx2*gRx3 | Full calibration achievable |
| | Rx2 | gTx1*gRx2 | | Rx4 | gTx2*gRx4 | |
| | Rx3 | gTx1*gRx3 | | | | |
| | | | | | | |
| 40_3 | Rx2 | gTx1*gRx2 | 40_4 | Rx3 | gTx2*gRx3 | No Rx1 measurement possible |
| | Rx3 | gTx1*gRx3 | | Rx4 | gTx2*gRx4 | |
| | Rx4 | qTx1*qRx4 | | | | |
| | | | | | | |

For example, the first result (where the first transmitter circuitry 20_1 is coupled to the first antenna port 40_1 and the available reception circuitry is Rx1 & Rx2, and the second transmitter circuitry 20_2 is coupled to the fourth antenna port 40_4 and the available reception circuitry is Rx3 & Rx4) does not measure any transfer function common between the first transmitter circuitry 20_1 and its associated reception paths 32 and the second transmitter circuitry 20_2 and its associated reception paths 32. Any calibration performed for first transmitter circuitry 20_1/its associated reception paths 32 is separate to (independent from) any calibration performed for the second transmitter circuitry 20_2/its associated reception paths 32.

In comparison, the third result (where the first transmitter circuitry 20_1 is coupled to the first antenna port 40_1 and the available reception circuitry is Rx1 & Rx2, and the second transmitter circuitry 20_2 is coupled to the second antenna port 40_2 and the available reception circuitry is Rx1 & Rx2 & Rx3) measures at least one transfer function (multiple transfer functions having gRx1, gRx2) common between the first transmitter circuitry 20_1 and its associated reception paths 32 and the second transmitter circuitry 20_2 and its associated reception paths 32. Any calibration performed for first transmitter circuitry 20_1/its associated reception paths is not separate to any calibration performed for the second transmitter circuitry 20_2/its associated reception paths 32. However, a transfer function (gRx4) is not measured by either the first transmitter circuitry 20_1 and its associated reception paths 32 nor the second transmitter circuitry 20_2 and its associated reception paths 32. The results 1 and 3 give enough information (all transfer functions) for a full calibration.

The second result (where the first transmitter circuitry 20_1 is coupled to the first antenna port 40_1 and the available reception circuitry is Rx1 & Rx2, and the second transmitter circuitry 20_2 is coupled to the third antenna port 40_3 and the available reception circuitry is Rx2 & Rx3 & Rx4) measures a transfer function (gRx2) common between the first transmitter circuitry 20_1 and its associated reception paths 32 and the second transmitter circuitry 20_2 and its associated reception paths 32. Any calibration performed for first transmitter circuitry 20_1/its associated reception paths 32 is not separate to any calibration performed for the second transmitter circuitry 20_2/its associated reception paths 32. All transfer functions are measured by either the first transmitter circuitry 20_1 and its associated reception paths 32 or the second transmitter circuitry 20_2 and its associated reception paths 32. The result 2 gives enough information (all transfer functions) for a full calibration.

It is desirable to be able to route a signal from transmitter circuitry 20_i to any of the antennas 42. Referring to FIG 11, it is possible to create a path from the first transmitter circuit 20_1 (or second transmitter circuitry 20_2) to any of the receiver paths 32_1, 32_2, 32_3, 33_4 (to respective receiver circuitry 30_1, 30_2, 30_3, 30_4). The paths from transmitter circuit 20_i to adjacent receiver paths 32 have small RF losses. The paths from transmitter circuit 20 to non-adjacent receiver paths 32 have much larger RF losses. By way of explanation, the path from the first transmitter circuitry 20_1 to first receiver path 32_1 (via an out-coupler 50_1, two switches 54_1, 56_1 and in-coupler 55_1) and the path from first transmitter circuitry 20_1 to second receiver path 32_2 (via an out-coupler 50_1, two switches 54_1, 56_2 and in-coupler 55_2) have small RF losses (two couplers). The path from first transmitter circuitry 20_1 to third receiver path 32_3 (via an out-coupler 50_1, two switches 54_1, 56_2, in-coupler 55_2 plus switch 60_2, coupler 50_2, switches 58_2, 57_3 and in-coupler 55_3) has significant RF losses (4 couplers). The path from first transmitter circuitry 20_1 to fourth receiver path 32_4 (via an out-coupler 50_1, two switches 54_1, 56_2, in-coupler 55_2 plus switch 60_2, coupler 50_2, switches 58_2, 57_3 and in-coupler 55_3 plus switch 60_3, coupler 50_3, switches 54_3, 56_4 and in-coupler 55_4) has very significant RF losses (6 couplers).

One option to address this problem would be to provide an additional switch between first out-coupled path 52_1 and (upper) second out-coupled path 52_2, (interconnecting inputs to switches 54_1, 54_2); an additional switch between (lower) second out-coupled path 52_2 and (upper) third out-coupled path 52_3 (interconnecting inputs to switches 58_2, 58_3), and an additional switch between (lower) third out-coupled path 52_3 and fourth out-coupled path 52_4 (interconnecting inputs to switches 54_3, 54_4).

This could allow the first transmitter circuitry 20_1 and the second transmitter circuitry 20-2 to present signals, simultaneously, at the same reception path 32. In this circumstance, the signals from the first transmitter circuitry 20_1 and the second transmitter circuitry 20_2 can be orthogonal to avoid interference.

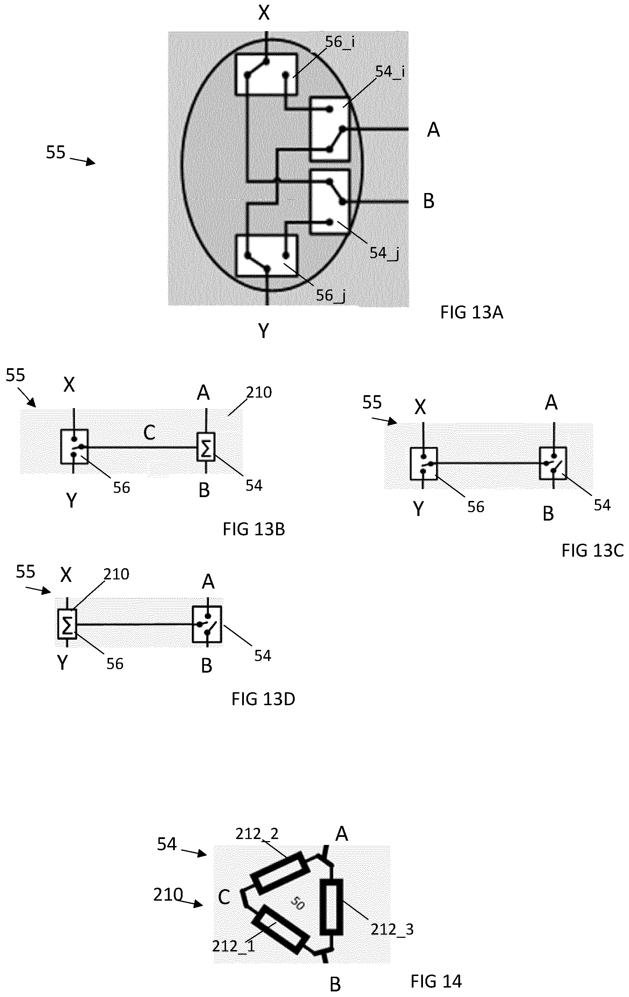

Other options are to modify the switching circuitry 55. FIG 13A illustrates an example of the switching circuitry 55 previously described. The switching circuity 55 can be modelled as a four port device- two input ports (A,B) and two output ports (X, Y).

The switching circuitry is configured to couple either of two transmitter circuitry to either of two reception circuitry. The switching circuitry 55 is for selective coupling of receiver circuitry 30 to transmitter circuitry 20. The switching circuitry 55 is symmetric as regards the first receiver circuitry 30_1 and the second receiver circuitry 30_2 and as regards the first transmitter circuitry 20_1 and the second transmitter circuitry 20_2. The switching-circuitry 55 is for controlling which of the signals coupled from different transmission paths 22 (by directional couplers 50) is coupled to the respective reception paths (via directional couplers 55)

The input to Tx switch circuit 54_i provides an input port A. The input Tx switch circuit 54_j provides an input port B. The output from Rx switch circuit 56_i provides an output port X. The output from Rx switch circuit 56_j provides an output port Y. The switching circuitry 55 couples the input port A to either of the output ports X, Y. The switching circuitry 55 couples the input port B to either of the output ports X, Y. The switching circuitry 55 can simultaneously couples the input port A to either of one the output ports X, Y and the input port B to the other one of the output ports X, Y.

FIGs 13B, 13C and 13D illustrate alternative switching circuitry 55. The switching circuitry 55 can simultaneously couple the input port A to either of one the output ports X, Y and the input port B to the other one of the output ports X, Y. A Tx component 54 provides the input ports A, B. A Rx component 56 provides the output ports X, Y. The Tx component 54 and the Rx component 56 are interconnected (via ports C).In both FIG 13B and FIG 13C, the Rx component 56 is a switch. In FIG 13B, the Tx component 54 is a power splitter 210. In FIG 13C, the Tx component 54 is a switch. In FIG 13D, the Tx component 54 is a Rx switch and the Rx component 56 is a power splitter.

FIG 14 illustrates an example of the power splitter 210 . The input ports A and B are interconnected via a component, a resistor in this example. The input ports A and C are interconnected via a component, a resistor in this example. The input ports B and the input B are interconnected via a component, a resistor in this example. The network formed is symmetric, in that the components (resistors) are the same and interchangeable.

Switches have the advantage (compared to power splitters) of lower loss, higher isolation (important for simultaneous measurements). The lower loss enables a higher dynamic range. Switches help isolate paths and reduce loss, but are active components and need power supply and control lines. Power splitters have the advantage that they are passive components and do not require a power supply nor control lines. However, a power splitter suffers from RF loss and this results in a lower dynamic range. Wilkinson power splitters can be used.

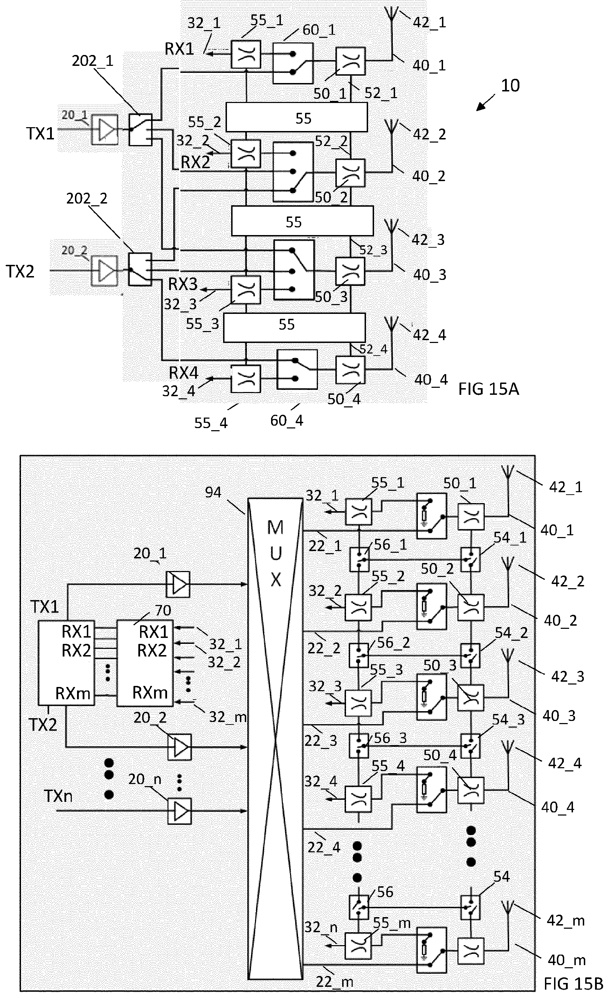

FIG 15A illustrates switching circuitry 55 in the apparatus 10 previously described. Using the switching circuitry 55 illustrated in FIG 13B in the apparatus 10 of FIG 15A, would mean that the switches 56 provide good isolation between calibration paths 32, but the power splitters reduce signal strength along the antenna paths 52. Using the switching circuitry 55 illustrated in FIG 13C in the apparatus 10 of FIG 15A, would mean that the switches provide good isolation between calibration paths 32, and also between antenna paths 52. Using the switching circuitry 55 illustrated in FIG 13D in the apparatus 10 of FIG 15A, would mean that the switches 54 provide good isolation between antenna paths 52 but the power splitter 56 reduces signal strength along the calibration paths 32.

FIG 15B illustrates an example similar to that illustrated in FIG 15A, where the switching circuitry 55 illustrated in FIG 13C is used. In addition, the two switches 202_1, 202 that support two transmitter circuitry 20_1, 20_2 are replaced by a multiplexer 94 that supports n transmitter circuitry 20 and m receiver circuitry 30. There are n TX streams and m RX streams and 'm' antennas Every downlink signal is fixed to one antenna 42 and the multiplexer 94 allow the uplink UL signals to be routed to any antenna port 40 or combinations thereof. Although the switching circuitry 55 illustrated in FIG 13C is used, the switching circuitry of any of FIGs 13A, 13B, 13C, 13D can be used and different combinations can be used. As m increases, the use of switches is favoured over power-splitters because power loss in the power splitters limits the dynamic range where an uplink signal has to be transferred across the whole "antenna manifold".

For the general case of 'n' TX chains and 'm' RX chains where typically n < m, there are (m + n) TX and RX chains for which the calibration coefficients need to be computed. As the proposed TX (or RX) calibration is performed relative to any one available TX (or RX) chains, the calibration coefficient of the reference TX and RX chains will be equal to 1. Hence, there will be remaining (n-1) TX chains and (m-1) RX chains for which the calibration coefficient needs to be computed. This is performed as follows:

Select the 'n' antenna from the available 'm' antennas (A1, A2,...,A_m) to transmit the TX1, TX2, ..., TX_n signals in the uplink (n < m). Set the state of switches 56, 54 such that each TX signal is fed back and received at each available RX chain. From the signals received at each RX chain, the joint response of the corresponding TX and RX chains selected in the overall forward and feedback path is obtained. For example, the switch 56 can connect up or connect down and the switch 54 can connect up or connect down. If a Tx signal from the first transmitter circuitry 20_1 is transmitted along the first transmission path 22_1 towards antenna 42_1, then select switches 54_1, 56_1 in the states ;up' and 'up' so that the out-coupled signal from out-coupler 50_1 is fed back to the first reception path 32_1. Next, the state of switch 56_1 is switched to down, so that the out-coupled signal is fed back to the second reception path 32_2. The route to the third reception path 32_3 is via switch 54_1, coupler 50_2, switch 54_2, switch 56_2, or via switch 54_1, switch 56_1, coupler 32_2, switch 56_2 etc The Tx calibration coefficients are calculated as previously described.

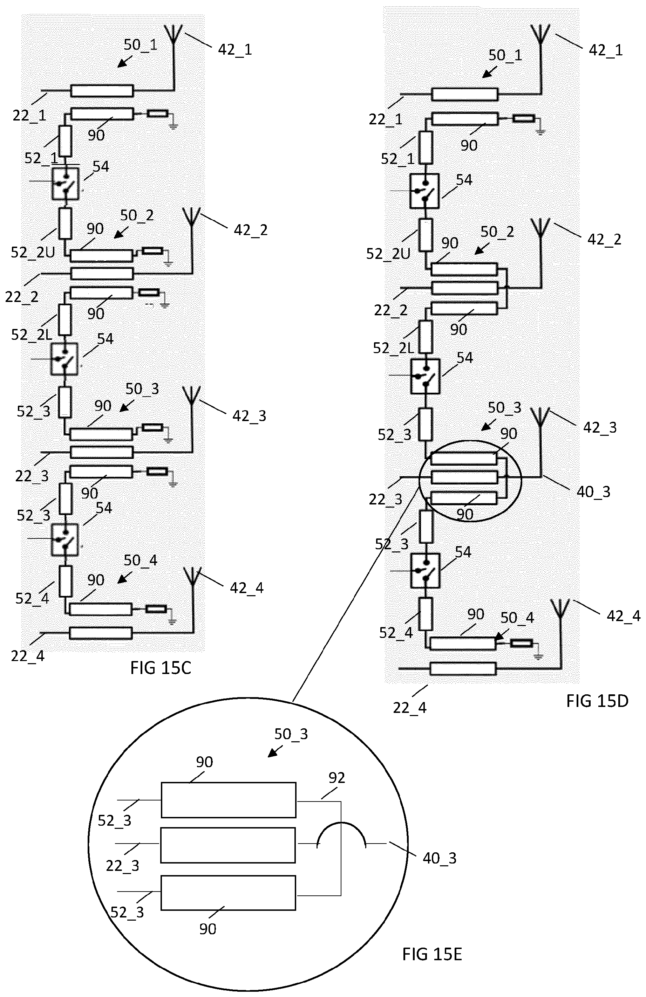

FIGs 15C and 15D illustrate different examples of couplers 50, 55. In FIG 15C, the (upper) out-coupled path 52_2U is connected to a coupling element 90 of a directional coupler (one port terminated) and the (lower) out-coupled path 52_2L is connected to a coupling element 90 of an separate, different directional coupler (one port terminated). There is a similar arrangement for the upper and lower out-coupled paths 52_3.

In FIG 15D, the (upper) out-coupled path 52_2U is connected to a coupling element 90 of a bi-directional coupler (no port terminated) and the (lower) out-coupled path 52_2L is connected to another coupling element 90 of the same bi-directional coupler (no port terminated). There is a similar arrangement for the upper and lower out-coupled paths 52_3. One coupling element 90 is placed on one side of the transmitter path 22_3 with a first polarity and the other coupling element 90 is placed on the side of the transmitter path 22_3 with a second polarity opposite the first polarity. The enlarged detail, illustrated in FIG 15E, shows an interconnect joins the coupling elements 90.

A microstrip realization is typical of couplers in that it comprises two parallel signal lines with the electric and magnetic fields of a signal on one line inducing currents and voltages on the other.

It is described how the entire antenna manifold can be calibrated by use of different embodiments. In case only a few uplink streams are supported it is only required to know or calibrate the phase relationships between the antenna ports that are used for up-link, which may speed up the calibration process and potentially save power in cases where the environment is only changing slowly if at all. However, calibrating the entire antenna manifold enables very fast switching to different sets of antenna ports for uplink as the correct phase relationship can be set immediately in case the environment changes, e.g. Head/hand movement.

It can be desirable for the switching circuitry 55 to have isolation states. Where a particular port is isolated. The following tables give the states for port A and for port B for different configurations of the switches 54_i, 54_j, 56_i, 56_j.

| 54_i | 54_j | 56_i | 56_j | A state |
|------|------|------|------|---------|
| UP   |      | L    |      | isolated |
| UP   |      | R    |      | to X |
| Down |      |      | L    | to Y |
| Down |      |      | R    | isolated |

| 54_i | 54_j | 56_i | 56_j | B |
|------|------|------|------|---|
|      | UP   | L    |      | to X |
|      | UP   | R    |      | isolated |
|      | Down |      | L    | isolated |
|      | Down |      | R    | to Y |

In at least some examples, the apparatus 10 comprises: first transmitter circuitry 20_1 for transmitting a signal; second transmitter circuitry 20_2 for transmitting a signal; first receiver circuitry 30_1 for receiving a signal; means for applying different transmission compensation to a signal transmitted by the first transmitter circuitry 20_1 and to a signal transmitted by the second transmitter circuitry 20_2;means for calibrating the different transmission compensation comprising: means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1; means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1; using a signal transmitted by the first transmitter circuitry 20_1 that is coupled, within the apparatus 10, to and received by the first receiver circuitry 30_1 and a signal transmitted by the second transmitter circuitry 20_2 that is coupled, within the apparatus 10, to and received by the first receiver circuitry 30_1 to determine the different transmission compensation for application to a signal transmitted by the first transmitter circuitry 20_1 and to a signal transmitted by the second transmitter circuitry 20_2.

In some examples, the apparatus 10 comprises means for using precoding to apply the different transmission compensation to a signal transmitted by the first transmitter circuitry 20_1 and to a signal transmitted by the second transmitter circuitry 20_2 for codebook-based uplink transmission.

In some examples, the apparatus 10 comprises means for using precoding to apply the different transmission compensation to a signal transmitted by the first transmitter circuitry 20_1 and to a signal transmitted by the second transmitter circuitry 20_2 for non-codebook based uplink transmission.

TX calibration (with concurrent Rx calibration) is useful for non-codebook based precoding for uplink transmission. TX calibration only (without concurrent Rx calibration) is useful for non-codebook based precoding for uplink transmission when Rx calibration is not required or occurs separately. TX calibration only (without concurrent Rx calibration) is useful for codebook-based precoding for uplink transmission. An example of codebook based precoding for uplink transmission is codebook based Type-1 beamforming in 3GPP. It is used for products like customer-premises equipment (CPE) and fixed wireless access. A use case where a transmit antenna array at the user equipment (UE) is manifold calibrated is when the UE (or CPE) uses an antenna array (e.g., a uniform array of cross pol elements), and when NR Type-I CSI is to be used as the codebook for UL precoding (applied in the baseband digital domain). The TX manifold calibration at the antenna array means that the transmit chains do not impact on the overall spatial channel response between the UE's baseband TX and the gNB's baseband RX. The structure of the Type I CSI assumes a certain arrangement of the antenna elements that are driven by the transceivers. If the array is not manifold calibrated, then the assumptions behind the Type I CSI are no longer valid and the performance will suffer. This is an example of an application of Tx calibration (independent of Rx calibration) for precoding (codebook based).

For non-codebook based UL precoding, TX-only manifold calibration can be used when reciprocity calibration can be achieved, for example, because RX-only manifold calibration is complemented via some other implementation. If RX manifold calibration mechanism in place, then adding TX manifold calibration provides reciprocity calibration (both TX and RX), enabling non-codebook based UL precoding.

Having manifold calibration on both TX and RX provides reciprocity calibration for non-codebook based UL precoding.

In at least some examples, different transmitter circuitry 20 provide different paths 22 to antenna ports 40 and different receiver circuitry 30 comprise different paths 32 from antenna ports 40. At least some of the transmitter circuitry 20 share a power amplifier that is switched to different paths 32/different antenna ports 40.

The different receiver circuitry 30 have distinct different low noise amplifiers.

The apparatus 10 is asymmetric in that it supports simultaneous operation of more receiver channels (simultaneously in-use receiver paths 32) than transmitter channels. (simultaneously in-use transmitter paths 22).

In at least some examples, the apparatus 10 is asymmetric because it comprises more low noise amplifiers than power amplifiers.

In at least some examples, the apparatus comprises switching circuitry 55 for selective coupling the first receiver circuitry 30_1 or second receiver circuitry 30_2 to at least one of the first transmitter circuitry 20_1 and the second transmitter circuitry 20_2.

In at least some examples, the switching circuitry 55 is symmetric as regards the first receiver circuitry 30_1 and the second receiver circuitry 30_2 and as regards the first transmitter circuitry 20_1 and the second transmitter circuitry 20_2.

In at least some examples, the apparatus 10 comprises: a first transmission directional coupler 50 for coupling the signal, transmitted by the first transmitter circuitry 20_1, out of a first transmission path 22_1 leading from the first transmitter circuitry 20_1,a second transmission directional coupler 50 for coupling the signal, transmitted by the second transmitter circuitry 20_2, out of a second transmission path 22_2 leading from the second transmitter circuitry 20_2,a first reception directional coupler 55_1 for coupling a signal coupled from transmitter circuitry to the first receiver circuitry 30_1,a second reception directional coupler 55_2 for coupling a signal coupled from transmitter circuitry to the second receiver circuitry 30_2;a transmission-selection switching-circuitry 55 for controlling whether a signal coupled from one or both of the first transmission directional coupler 55_1 and the second transmission directional coupler 55_2 is coupled to the first reception directional coupler 55_1 or the second reception directional coupler 55_2.

In some examples, the apparatus comprises: a first antenna port 40;a second antenna port 40,wherein the first transmitter circuitry 20_1 is for transmitting a signal via the first antenna port 40, the second transmitter circuitry 20_2 is for transmitting a signal via the second antenna port 40, the first receiver circuitry 30_1 is for receiving a signal via the first antenna port 40,; and wherein the different transmission compensation is applied to a signal transmitted by the first transmitter circuitry 20_1 via the first antenna port 40 and to a signal transmitted by the second transmitter circuitry 20_2 via the second antenna port 40, and the means for calibrating the different transmission compensation determines the different transmission compensation for application to a signal transmitted by the first transmitter circuitry 20_1 via the first antenna port 40 and to a signal transmitted by the second transmitter circuitry 20_2 via the second antenna port 40.

In at least some examples, the apparatus 10 comprises: second receiver circuitry 30_2 for receiving a signal; third transmitter circuitry for transmitting a signal; means for applying different transmission compensation to signals transmitted by different transmitter circuitry; means for calibrating the different transmission compensation comprising: means for coupling the third transmitter circuitry, within the apparatus 10, to receiver circuitry wherein a signal transmitted by the third transmitter circuitry is coupled, within the apparatus 10, for reception by the receiver circuitry; using a signal transmitted by the third transmitter circuitry that is coupled, within the apparatus 10, to and received by receiver circuitry and a signal transmitted by another transmitter circuitry that is coupled, within the apparatus 10, to and received by the receiver circuitry to determine the different transmission compensation for application to a signal transmitted by the third transmitter circuitry and to a signal transmitted by the other transmitter circuitry.

In some examples, the means for calibrating the different transmission compensation comprises: means for coupling the third transmitter circuitry, within the apparatus 10, to the second receiver circuitry 30_2 wherein a signal transmitted by the third transmitter circuitry is coupled, within the apparatus 10, for reception by the second receiver circuitry 30_2; means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2; using a signal transmitted by the second transmitter circuitry 20_2, or the first transmitter circuitry 20_1, that is coupled, within the apparatus 10, to and received by the second receiver circuitry 30_2, and a signal transmitted by the third transmitter circuitry that is coupled, within the apparatus 10, to and received by the second receiver circuitry 30_2, to determine the reception compensation for application to a signal transmitted by the third transmitter circuitry.

In some examples, the apparatus 10 comprises: a third antenna port 40;wherein the third transmitter circuitry is for transmitting a signal via the third antenna port 40;wherein different transmission compensation is applied to a signal transmitted by the first transmitter circuitry 20_1 via the first antenna port 40 and to a signal transmitted by the third transmitter circuitry via the third antenna port 40;and wherein calibrating the different transmission compensation determines the different transmission compensation for application to a signal transmitted by the first transmitter circuitry 20_1 via the first antenna port 40 and to a signal transmitted by the third transmitter circuitry via the third antenna port 40.

In at least some examples, the means for calibrating the different transmission compensation comprises means for: dividing a baseband symbol received at the first receiver circuitry 30_1 by a baseband symbol transmitted by the first transmitter circuitry 20_1 coupled to the first receiver circuitry 30_1 to obtain a transfer function for the first transmitter circuitry 20_1 and the first receiver circuitry 30_1;dividing a baseband symbol received at the first receiver circuitry 30_1 by a baseband symbol transmitted by the second transmitter circuitry 20_2 coupled to the first receiver circuitry 30_1 to obtain a transfer function for the first transmitter circuitry 20_1 and the second receiver circuitry 30_2;dividing one of the two transfer functions by the other transfer function.

In at least some examples, the means for calibrating the different transmission compensation is operational during uplink transmission from the apparatus 10 to a transmission reception point for purposes other than calibrating the different transmission compensation.

In at least some examples, the apparatus 10 comprises a first antenna 42_1 for transmission and reception and a second antenna 42_2 for transmission and reception, wherein the first antenna has maximum gain in a first direction and the second antenna has maximum gain in a second direction different to the first direction

In at least some examples, the first antenna 42_1 is associated with the first transmitter circuitry 20_1 and with the first receiver circuitry 30_1 and the second antenna 42_2 is associated with the second transmitter circuitry 20_2.

In at least some examples, the apparatus 10 is configured as transmitter apparatus or transceiver apparatus. In at least some examples, the apparatus 10 is configured as user equipment or as customer-premises equipment (e.g. a repeater or mini base station)

In at least some examples, an apparatus 10 comprises means for applying precoding to a signal transmitted by transmitter circuitry 20_i based on: reception by a first receiver circuitry 30_1 of a signal transmitted by an other transmitter circuitry 20_j that is coupled, within the apparatus 10, to and received by the first receiver circuitry 30_1; and reception at the first receiver circuitry 30_1 of a signal transmitted by the transmitter circuitry 20_i that is coupled, within the apparatus 10, to and received by the first receiver circuitry 30_1.

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

Radio channel reciprocity at a UE is based on Downlink reference signals and enables autonomous non-codebook UL pre-coding at the UE.

The UE determines its precoding by using downlink CSI-RS (Channel State Information-Reference Signal) and leveraging DL-UL reciprocity at the UE TRX (transceiver).

This procedure is based on the following steps :i) CSI-RSs are sent from the network to the UE, where the UE estimates the channel and calculates a precoder for UL at the UE .ii) Pre-coded SRSs (Sounding Reference Signal) are sent in UL from the UE to the network based on previous steps. iii) Network performs a selection of the best SRS and indicates this to the UE using the SRI (SRS Resource Indicator).iv) PUSCH (Physical Uplink Shared CHannel) transmission uses the latest calculated precoding at the UE based on the indicated SRI.

This procedure assumes a full channel reciprocity between UL and DL. However, the UE RF Front-End is not reciprocal as the UL phase difference between antenna ports can dynamically vary independently from the DL phase difference. This is one of the main reasons that non-codebook based UL-MIMO has not been deployed commercially so far.

Current smart phone implementations do not enable reciprocity between uplink and downlink signals. Channel estimate as determined in the downlink direction can therefore not be used to obtain optimized precoding in the uplink direction.

This problem stems from the different and non-calibrated implementations of the TX and RX circuitry. When the channel is estimated based on the DL signal, the estimation includes the UE RX circuitry 30, however this differs from the TX one. In other words, the DL based channel estimation differs largely from the UL channel, making the DL estimation unusable for optimal precoder estimation.

Root cause behind this problem is the fact that exact phase and amplitude of RF transmit and receive signals at the antenna ports (caused due to distortion/imbalance introduced by RF front ends) is not known. The apparatus 10 provides for calibrating the receive and transmit chains so that the receive channel estimates obtained in the downlink can be leveraged to determine the precoding to use in the uplink.

This apparatus 10 provides a novel circuit and calibration method that can be implemented in a user equipment (UE). This enables amplitude and phase reciprocity calibration in a UE having multiple antenna ports (2 or more).

The proposed circuit is scalable meaning it can be extended to 'n' antenna ports where $n \geq 2$ and the combination of the proposed circuit and calibration method can be implemented in any type of UE (smartphone, tablet, laptop, customer premise device, fixed wireless access, vehicle mounted/inbuilt device, etc.) or other apparatus. The apparatus 10 can be used for Base stations or any equipment that contains multiple RX/TX chains.

The switching circuitry 55 consists of multiple switches and couplers which are combined in a novel way to enable the circuit to feedback the RF signal available at the input of a given transmit antenna port 40_i back to the RF input section of the receive chain (reception path 32_j) of the same or adjacent TRX module (j=i, or j=i+/- 1). This feedback framework will enable the UE implementing the proposed circuit to measure the combined response M(i, j) (which includes the effects of RF imperfections, e.g., amplitude and/or phase imbalance) of the transmit and receive chains in the baseband domain.

It is worth mentioning that symmetry is present in the illustrated examples of the switching circuitry 55.

The switching circuitry 55 only contains passive components and RF switches for which linearity and rapid phase shifts should not be a problem or concern.

The proposed circuit enables the framework to measure the combined response M(i, j) of transmit and receive chains 20_i, 30_j in the baseband from which the transmit and receive calibration coefficients R are computed. The computed receive calibration coefficients R(Rx, i, j) are applied during the downlink operation whereas the transmit calibration coefficients R(Tx, i, j) are applied during the uplink operation, in the baseband, to enable amplitude and phase reciprocity at the UE.

The combination of the proposed circuit with the proposed calibration method will enable reciprocity calibration at the UE. This novel calibration technique neither requires any dedicated calibration transceiver nor any over the air (OTA) signaling, thereby saving both the network resources as well as the cost and physical real estate of an extra calibration transceiver in the UE.

A proposed circuit for 2 antenna port UE scenario is shown in FIG. 5 whereas the extended circuit for 4 antenna port UE scenario is shown in FIG. 9 .

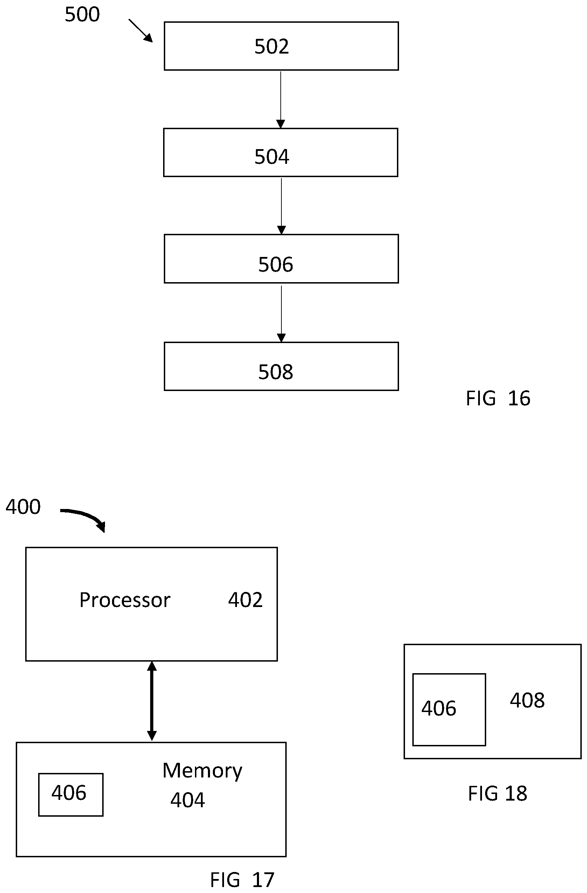

This section describes the proposed calibration procedure to be implemented at the UE 10 for compensating the gain and phase imbalance between the UE's TX chains (and optionally RX chains) in the TRX modules. The overall calibration procedure is divided into 3 distinct phases as illustrated in FIG 16.

At block 502, the method comprises measuring a combined response for the same TRX module. Measure mutual combined response M(i, i) e.g. perform 'n' parallel measurements as follows: Mpp = gTXp*gRXp, where p = 1,...,n (i.e., M(1,1), M(2,2), M(3,3), ..., M(n, n))

At block 504, the method comprises measuring a combined response for adjacent TRX module. Measure cross combined response M(i,i+1) and/or M(i,i-1). e.g. Perform 'n-1' parallel measurements as follows: Mpq = gTXp*gRXq where p = 1, ... , n-1; and q = (p + 1) (i.e., M(1,2), M(2,3), ..., M((n-1), n))

At block 506, the method comprises determining the transmitter and (optionally) the receiver calibration coefficients R.

Calculate 'n-1' coefficients, R(Rx, p, q) as follows: R(Rx, p, q) = M(p, p)/M(p, q), where p = 1, ... , n-1; and (q = p + 1) Calculate Calibration coefficients for RX chain 'r' (i.e., RX chain '2' to RX chain 'n') as follows when RX chain '1' is taken as the reference RX chain:

$$R(Rx, 1, r) = \prod_{p=1}^{r-1} R(Rx, p, q) = R(Rx, 1, 2)*R(Rx, 2,3)*...*R(Rx, (r-1), r)$$ , where $(2 \leq r \leq n)$

Calculate 'n-1' coefficients, R(Tx, p, q) as follows: R(Tx, p, q) = M(p, p)/M(q, q), where p = 1, ... , n-1; and (q = p + 1) Or R(Tx, p, q) = M(p, p)/M(q, p), where p = 1, ... , n-1; and (q = p + 1) Calculate Calibration coefficients for TX chain 't' (i.e., TX chain '2' to TX chain 'n') as follows when TX chain '1' is taken as the reference TX chain:

$$R(TX, 1, t) = \prod_{p=1}^{t-1} R(Tx, p, q) = R(Tx, 1, 2)*R(Tx, 2, 3)*...*R(Tx, (t-1), t)$$ , where $(2 \leq t \leq n)$

At block 508, the method 500 applies the calibration.

Treating the receiver circuitry 30_j as a reference (no calibration required), then apply transmission calibration coefficient R(Rx, j, i)= gRXj/gRXi to the signal received by the receiver circuitry 30_i

Treating the transmitter circuitry 20_k as a reference (no calibration required), then apply transmission calibration coefficient R(Tx, k, i)= gTXk/gTXi to the signal transmitted by the transmitter circuitry 20_i

The above described approach has the following advantages: No need for separate calibration receiver as the normal receiver is part of the calibration path. This enables very fast update and so in turn makes it easy to adapt to user interactions (antenna loaded by the human hand) that may impact this. Calibration can be done during any transmit scheduling, no need for special measurement gaps. TX phase coherence as well as means to ensure RX/TX reciprocity are calibrated simultaneously. Couplers are used to feed the signal from the uplink (TX) back to the receive circuitry whereby "normal" gain settings for receive and transmit circuitry can be used.

RF loss in the out-couplers from the transmission paths as well as the loss in the RF switch network, need to be high enough to enable the receive chain (receiver circuitry 30) to remain in the linear range in case maximum gain is set for both the transmit and receive circuitry which is likely in case a UE is at "Cell edge".

Intermodulation according to 3GPP is tested with unwanted signal levels of -46 dBm, while the wanted signal for some bands is set to about -91 dBm. The receiver can therefore not be expected to be perfectly within its linear range when the receive input power is above -46 dBm within a few dB. Since output power might be as high as 23 dBm should the combined loss in the RF switches and couplers mentioned above be more than 23 + 46 dB = 69 dB.

It may be difficult to achieve more than 69 dB isolation in one RF switch This can be solved by splitting the receive chain and enable the first gain stage in the receive chain to be turned off and adding an additional switch that provides additional RF isolation.. 30 dB isolation in an RF switch is practically possible and the isolation in a LNA gain stage that is "off' can also be designed to be about 30 dB. Combined practical isolation from the RX/TX switch, to receive input, can therefore be up to 90 dB. Exact isolation numbers strongly depend on the used technology and the exact frequency.

The couplers may be designed as simple elements such as capacitive coupling elements or inductive coupling elements or resistors . Another solution is however directional couplers. The system is then less sensitive to mismatch on the antenna ports as the reflected signal from the antenna terminal is attenuated as compared with use of simple capacitive coupling elements.

Directional coupler works better and in a predictable manner if all the ports of the coupler structure are terminated at the correct impedance. The resistors/terminations are "turned on" when the system is in calibration state during uplink.

FIG 17 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in FIG 17 the controller 400 may be implemented using instructions that enable hardware functionality, for example, by using executable instructions 406 in a general-purpose or special-purpose processor 402 that may be stored on a machine readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores instructions, program, or code 406 that controls the operation of the apparatus 10 when loaded into the processor 402. The computer program instructions, program, or code 406, provide the logic and routines that enables the apparatus 10 to perform the methods illustrated in the accompanying FIGs. The processor 402 by reading the memory 404 is configured to load and execute the instructions, program, or code 406.

The apparatus 10 comprises: at least one processor 402; and at least one memory 404 storing instructions that, when executed by the at least one processor 402, cause the apparatus at least to perform: calibrating transmission compensation comprising: coupling, within an apparatus 10, of a first one of different transmitter circuitry, to a first receiver circuitry 30_1 wherein a signal transmitted by the first one of the different transmitter circuitry is coupled, within the apparatus 10, for reception by the first receiver circuitry 30_1; coupling, within the apparatus 10, of a second one of the different transmitter circuitry to the first receiver circuitry 30_1 wherein a signal transmitted by the second one of the different transmitter circuitry is coupled, within the apparatus 10, for reception by the first receiver circuitry 30_1; using a signal transmitted by the first one of the different transmitter circuitry that is coupled, within the apparatus 10, to and received by the first receiver circuitry 30_1 and a signal transmitted by the second one of the different transmitter circuitry that is coupled, within the apparatus 10, to and received by the first receiver circuitry 30_1 to determine transmission compensation for application to a signal transmitted by the second one of the different transmitter circuitry; and applying the determined transmission compensation to a signal transmitted by the second one of the different transmitter circuitry.

As illustrated in FIG 18, the instructions, program, or code 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

The term "non-transitory" as used herein, is a limitation of the medium itself (i.e., tangible, not a signal ) as opposed to a limitation on data storage persistency (e.g., RAM vs. ROM).

Computer program instructions for causing an apparatus to perform at least the following or for performing at least the following: determining transmission compensation using a signal transmitted by a first one of different transmitter circuitry that is coupled, within the apparatus 10, to and received by the first receiver circuitry 30_1 and a signal transmitted by the second one of the different transmitter circuitry that is coupled, within the apparatus 10, to and received by the first receiver circuitry 30_1 to determine transmission compensation for application to a signal transmitted by the second one of the different transmitter circuitry; and application of the determined transmission compensation to a signal transmitted by the second one of the different transmitter circuitry.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:

(a) hardware-only circuitry implementations (such as implementations in only analog and/or digital circuitry) and(b) combinations of hardware circuits and software, such as (as applicable):a combination of analog and/or digital hardware circuit(s) with software/firmware and any portions of hardware processor(s) with software (including digital signal processor(s)), software, and memory or memories that work together to cause an apparatus, such as a mobile phone or server, to perform various functions and(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can, for example be a module. A controller 400 of the apparatus 10 can, for example be a module.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon. I/we claim:

**Claims**

1. An apparatus comprising:

> first transmitter circuitry for transmitting a signal;
> second transmitter circuitry for transmitting a signal;
> first receiver circuitry for receiving a signal;
> means for applying different transmission compensation to a signal transmitted by the first transmitter circuitry and to a signal transmitted by the second transmitter circuitry;
> means for calibrating the different transmission compensation comprising:
>
>> means for coupling the first transmitter circuitry, within the apparatus, to the first receiver circuitry wherein a signal transmitted by the first transmitter circuitry is coupled, within the apparatus, for reception by the first receiver circuitry;
>> means for coupling the second transmitter circuitry, within the apparatus, to the first receiver circuitry wherein a signal transmitted by the second transmitter circuitry is coupled, within the apparatus, for reception by the first receiver circuitry;
>> using a signal transmitted by the first transmitter circuitry that is coupled, within the apparatus, to and received by the first receiver circuitry and a signal transmitted by the second transmitter circuitry that is coupled, within the apparatus, to and received by the first receiver circuitry to determine the different transmission compensation for application to a signal transmitted by the first transmitter circuitry and to a signal transmitted by the second transmitter circuitry,

wherein the apparatus is asymmetric in that it supports simultaneous operation of more receiver channels than transmitter channels.

2.  An apparatus according to claim 1, comprising means for using precoding to apply the different transmission compensation to a signal transmitted by the first transmitter circuitry and to a signal transmitted by the second transmitter circuitry for codebook based uplink transmission or for non-codebook based uplink transmission.

3.  An apparatus as claimed in claim 1 or claim 2, wherein different transmitter circuitry provide different paths to antenna ports and wherein different receiver circuitry comprise different paths from antenna ports, wherein at least some of the transmitter circuitry share a power amplifier and/or wherein at least some of the transmitter circuitry can be switched to different antenna ports.

4.  An apparatus as claimed in any preceding claim, wherein different receivers have distinct different low noise amplifiers, wherein the apparatus is asymmetric in that it comprises more low noise amplifiers than power amplifiers and supports simultaneous operation of more receiver channels than transmitter channels.

5.  An apparatus as claimed in any preceding claim, comprising switching circuitry for selective coupling either of the first receiver circuitry or second receiver circuitry to either of the first transmitter circuitry and the second transmitter circuitry.

6.  An apparatus as claimed in any preceding claim, comprising:

    a first transmission directional coupler for coupling the signal, transmitted by the first transmitter circuitry, out of a first transmission path leading from the first transmitter circuitry,
    a second transmission directional coupler for coupling the signal, transmitted by the second transmitter circuitry, out of a second transmission path leading from the second transmitter circuitry,
    a first reception directional coupler for coupling a signal coupled from transmitter circuitry to the first receiver circuitry,
    a second reception directional coupler for coupling a signal coupled from transmitter circuitry to the second receiver circuitry;
    a transmission-selection switching-circuitry for controlling whether a signal coupled from one or both of the first transmission directional coupler and the second transmission directional coupler is coupled to the first reception directional coupler or the second reception directional coupler.

7.  An apparatus as claimed in any preceding claim, comprising:

    a first antenna port;
    a second antenna port,
    wherein the first transmitter circuitry is for transmitting a signal via the first antenna port, the second transmitter circuitry is for transmitting a signal via the second antenna port, the first receiver circuitry is for receiving a signal via the first antenna port; and
    wherein the different transmission compensation is applied to a signal transmitted by the first transmitter circuitry via the first antenna port and
    to a signal transmitted by the second transmitter circuitry via the second antenna port, and the means for calibrating the different transmission compensation determines the different transmission compensation for application to a signal transmitted by the first transmitter circuitry via the first antenna port and to a signal transmitted by the second transmitter circuitry via the second antenna port.

8.  An apparatus as claimed in any preceding claim, comprising:

    second receiver circuitry for receiving a signal;
    third transmitter circuitry for transmitting a signal;
    means for applying different transmission compensation to signals transmitted by different transmitter circuitry;
    means for calibrating the different transmission compensation comprising:

        means for coupling the third transmitter circuitry, within the apparatus, to receiver circuitry wherein a signal transmitted by the third transmitter circuitry is coupled, within the apparatus, for reception by the receiver circuitry;

using a signal transmitted by the third transmitter circuitry that is coupled, within the apparatus, to and received by receiver circuitry and a signal transmitted by another transmitter circuitry that is coupled, within the apparatus, to and received by the receiver circuitry to determine the different transmission compensation for application to a signal transmitted by the third transmitter circuitry and to a signal transmitted by the other transmitter circuitry.

9. An apparatus as claimed in claim 8, wherein:
the means for calibrating the different transmission compensation comprises:

means for coupling the third transmitter circuitry, within the apparatus, to the second receiver circuitry wherein a signal transmitted by the third transmitter circuitry is coupled, within the apparatus, for reception by the second receiver circuitry;
means for coupling the second transmitter circuitry, within the apparatus, to the second receiver circuitry wherein a signal transmitted by the second transmitter circuitry is coupled, within the apparatus, for reception by the second receiver circuitry;
using a signal transmitted by the second transmitter circuitry, or the first transmitter circuitry, that is coupled, within the apparatus, to and received by the second receiver circuitry, and a signal transmitted by the third transmitter circuitry that is coupled, within the apparatus, to and received by the second receiver circuitry, to determine the transmission compensation for application to a signal transmitted by the third transmitter circuitry.

10. An apparatus as claimed in any preceding claim, wherein the means for calibrating the different transmission compensation comprises means for:

dividing a baseband symbol received at the first receiver circuitry by a baseband symbol transmitted by the first transmitter circuitry coupled to the first receiver circuitry to obtain a transfer function for the first transmitter circuitry and the first receiver circuitry;
dividing a baseband symbol received at the first receiver circuitry by a baseband symbol transmitted by the second transmitter circuitry coupled to the first receiver circuitry to obtain a transfer function for the first transmitter circuitry and the second receiver circuitry;
dividing one of the two transfer functions by the other transfer function.

11. An apparatus as claimed in any preceding claim, wherein the means for calibrating the different transmission compensation is operational during uplink transmission from the apparatus to a transmission reception point for purposes other than calibrating the different transmission compensation.

12. An apparatus as claimed in any preceding claim, comprising a first antenna for transmission and reception and a second antenna for transmission and reception, wherein the first antenna has maximum gain in a first direction and the second antenna has maximum gain in a second direction different to the first direction.

13. An apparatus as claimed in any preceding claim, in which the apparatus is a user equipment.

14. A method comprising:

calibrating transmission compensation comprising:

coupling, within an apparatus, of a first one of different transmitter circuitry, to a first receiver circuitry wherein a signal transmitted by the first one of the different transmitter circuitry is coupled, within the apparatus, for reception by the first receiver circuitry;
coupling, within the apparatus, of a second one of the different transmitter circuitry to the first receiver circuitry wherein a signal transmitted by the second one of the different transmitter circuitry is coupled, within the apparatus, for reception by the first receiver circuitry;
using a signal transmitted by the first one of the different transmitter circuitry that is coupled, within the apparatus, to and received by the first receiver circuitry and a signal transmitted by the second one of the different transmitter circuitry that is coupled, within the apparatus, to and received by the first receiver circuitry to determine transmission compensation for application to a signal transmitted by the second one of the different transmitter circuitry;

and
applying the determined transmission compensation to a signal transmitted by the second one of the different transmitter circuitry, wherein the apparatus is asymmetric in that it supports simultaneous operation of more receiver channels than transmitter channels.

15. A computer program that when run on one or more processors of an apparatus, causes:

determining transmission compensation using a signal transmitted by a first one of different transmitter circuitry that is coupled, within the apparatus, to and received by the first receiver circuitry and a signal transmitted by the second one of the different transmitter circuitry that is coupled, within the apparatus, to and received by the first receiver circuitry to determine transmission compensation for application to a signal transmitted by the second one of the different transmitter circuitry;
and
application of the determined transmission compensation to a signal transmitted by the second one of the different transmitter circuitry,
wherein the apparatus is asymmetric in that it supports simultaneous operation of more receiver channels than transmitter channels.

20_1 — TX1    22_1 → ANT PORT 1    10    40_1

30_1 — RX1    52_11

$M(1,1) = gTx1 * gRx1$

30_2 — RX2

20_2 — TX2    ANT PORT 2    40_2

FIG 1A

---

20_1 — TX1    22_1 → ANT PORT 1    10    40_1

30_1 — RX1

52_12    $M(1, 2) = gTx1 * gRx2$

30_2 — RX2

20_2 — TX2    ANT PORT 2    40_2

FIG 1B

---

20_1 — TX1    ANT PORT 1    10    40_1

30_1 — RX1

$M(2,2) = gTx2 * gRx2$

30_2 — RX2    ANT PORT 2    40_2

52_22

20_2 — TX2    22_2

FIG 1C

---

20_1 — TX1    ANT PORT 1    10

30_1 — RX1    40_1

52_21    $M(2, 1) = gTx2 * gRx1$

30_2 — RX2

20_2 — TX2    ANT PORT 2    40_2

22_2

FIG 1D

FIG 2A

FIG 2B

FIG 3

FIG 4

FIG 5

FIG 6A

FIG 6B

FIG 7

FIG 8A

FIG 8B

FIG 9

FIG 10A

FIG 10B

FIG 11

FIG 12A

FIG 12B

FIG 13A

FIG 13B

FIG 13C

FIG 13D

FIG 14

FIG 15A

FIG 15B

FIG 15C

FIG 15D

FIG 15E

500

502

504

506

508

FIG 16

400

Processor    402

Memory
406    404

FIG 17

406    408

FIG 18

Europäisches
Patentamt
European
Patent Office
Office européen
des brevets

# EUROPEAN SEARCH REPORT

**Application Number**

EP 25 18 7526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/208774 A1 (SALHOV MOSHE [IL] ET AL) 15 August 2013 (2013-08-15) <br> * paragraph [0006] - paragraph [0007] * <br> * paragraph [0010] * <br> * paragraph [0012] - paragraph [0017] * <br> * paragraph [0037] - paragraph [0045] * <br> * paragraph [0047] * <br> * figures 1Ai-1Aiii * <br> ----- | 1-15 | INV. <br> H04B17/10 <br> H04B17/14 <br> H04L5/00 <br> H04L25/02 <br> H04W52/24 |
| X | US 2020/076517 A1 (ZHU HUAISONG [CN] ET AL) 5 March 2020 (2020-03-05) <br> * paragraph [0005] * <br> * paragraph [0086] - paragraph [0103] * <br> * figures 9a-9b * <br> ----- | 1-15 | |
| A | EP 1 559 209 B1 (QUALCOMM INC [US]) 3 April 2013 (2013-04-03) <br> * claims 11,16,38 * <br> * paragraph [0004] - paragraph [0005] * <br> * paragraph [0008] * <br> * paragraph [0101] - paragraph [0103] * <br> ----- | 1-15 | |
| A | LENOVO: "Discussion of SRS enhancement", 3GPP DRAFT; R1-2204166, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG1, no. e-Meeting; 20220509 - 20220520 <br> 29 April 2022 (2022-04-29), XP052153395, <br> Retrieved from the Internet: <br> URL:https://ftp.3gpp.org/tsg_ran/WG1_RL1/T SGR1_109-e/Docs/R1-2204166.zip R1-2204166 Discussion of SRS enhancement.docx <br> [retrieved on 2022-04-29] <br> * section 2.2; <br> page 3 * <br> ----- | 1-15 | **TECHNICAL FIELDS SEARCHED (IPC)** <br><br> H04B <br> H04L <br> H04W |

The present search report has been drawn up for all claims

| Place of search | Date of completion of the search | Examiner |
|---|---|---|
| The Hague | 6 November 2025 | Sklavos, Alexandros |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 7526

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | | | Publication date | Patent family member(s) | | | Publication date |
|---|---|---|---|---|---|---|---|
| US | 2013208774 | A1 | 15-08-2013 | US | 2013208774 | A1 | 15-08-2013 |
| | | | | WO | 2013024463 | A2 | 21-02-2013 |
| US | 2020076517 | A1 | 05-03-2020 | EP | 3560118 | A1 | 30-10-2019 |
| | | | | US | 2020076517 | A1 | 05-03-2020 |
| | | | | WO | 2018112879 | A1 | 28-06-2018 |
| EP | 1559209 | B1 | 03-04-2013 | AU | 2003287328 | A1 | 13-05-2004 |
| | | | | AU | 2009203088 | A1 | 20-08-2009 |
| | | | | BR | 0315558 | A | 17-01-2006 |
| | | | | BR | PI0315558 | B1 | 13-10-2020 |
| | | | | CA | 2502804 | A1 | 06-05-2004 |
| | | | | CA | 2753327 | A1 | 06-05-2004 |
| | | | | CA | 2753403 | A1 | 06-05-2004 |
| | | | | EP | 1559209 | A2 | 03-08-2005 |
| | | | | ES | 2407839 | T3 | 14-06-2013 |
| | | | | JP | 4860925 | B2 | 25-01-2012 |
| | | | | JP | 2006504341 | A | 02-02-2006 |
| | | | | JP | 2012016037 | A | 19-01-2012 |
| | | | | KR | 20050060105 | A | 21-06-2005 |
| | | | | MX | PA05004318 | A | 26-08-2005 |
| | | | | TW | I358914 | B | 21-02-2012 |
| | | | | UA | 85830 | C2 | 10-03-2009 |
| | | | | US | 2004087324 | A1 | 06-05-2004 |
| | | | | US | 2007086536 | A1 | 19-04-2007 |
| | | | | WO | 2004038952 | A2 | 06-05-2004 |

EPO FORM P0459

For more details about this annex : see Official Journal of the European Patent Office, No. 12/82